# EUROPEAN PATENT APPLICATION

(11) **EP 2 674 874 A1**
(43) Date of publication of application: **18.12.2013**
(21) Application number: 11858244.4
(22) Date of filing: 08.02.2011
(51) Int. Cl.: G06F 17/30

(54) **SEARCH PROGRAM, SEARCH APPARATUS, AND SEARCH METHOD**

(71) Applicant: Fujitsu Limited, Kawasaki-shi, Kanagawa 211-8588 (JP)
(72) Inventor: OHTA, Takafumi, Kawasaki-shi Kanagawa 211-8588 (JP); KATAOKA, Masahiro, Kawasaki-shi Kanagawa 211-8588 (JP)
(74) Representative: HOFFMANN EITLE
(86) International application number: PCT/JP2011/052666
(87) International publication number: WO 2012/108006

(57) **Abstract**

In (A), classification codes "#1", "#10", and "#1032" of a search word "curry-and-rice" are acquired for tiers. In (B), for a character string for comparison "curry-and-rice, a food prepared by putting curry on rice", number of appearances of the major classification code "#1" (food) is four, number of appearances of the intermediate classification code "#10" (rice) is two, number of appearances of the minor classification code "#1032" (curry-and-rice) is one, number of appearances of an intermediate classification code "#11" (spice) is one, and number of appearances of a minor classification code "#1154" (curry) is one. In (C), the number of appearances acquired in (A) is converted into a vector. The number of appearances acquired in (B) is converted into a vector. A degree of similarity is calculated by acquiring the inner product of these vectors. In (C), the degree of similarity is seven. Automatic selection or refusal of a range for the fuzzy retrieval enables the accuracy of fuzzy retrieval to be improved.

## Description

### TECHNICAL FIELD

The embodiment discussed herein is related to a retrieval program, a retrieving apparatus, and a retrieval method that retrieve information.

### BACKGROUND ART

Fuzzy retrieval is generally a retrieval method by which, for example, when character strings to be retrieved such as "scenery" and "shoot" are given, a character string such as "take a picture", which is similar in meaning of the character strings to be retrieved, can be retrieved even though the character string does not match the character strings to be retrieved.

According to a disclosed retrieval method for such fuzzy retrieval, plural key words (the key words include classification codes thereof) are converted into a vector and score calculation is executed (see, e.g., Patent Document 1). A retrieval method is disclosed of executing free word retrieval using a bit-map-type full text index. The bit-map-type full text index forms a hierarchical configuration, together with block bit maps each having therein a block having bit strings disposed therein each, for each character, for the number of bits equal to the character (see, e.g., Patent Document 2).

Another retrieval method is disclosed according to which the degree of similarity is calculated between a vector of an input symbol string and a reference vector of a predetermined symbol string registered in a dictionary; and, when any error is found, the error is corrected to a word that corresponds to a symbol string based on a retrieval from a dictionary (see, e.g., Patent Document 3).

A technique is also disclosed according to which fuzzy retrieval is realized in executing manual retrieval such as a portable telephone using statistical information on inquiries from customers in a call center, etc., (see, e.g., Patent Documents 4 and 5). A filtering technique is also disclosed that is based on synonym inputting and a kernel function (see, e.g., Patent Document 1).

Patent Document 1: Japanese Laid-Open Patent Publication No. H9-288683
Patent Document 2: Japanese Laid-Open Patent Publication No. H8-69476
Patent Document 3: Japanese Laid-Open Patent Publication No. H8-166966
Patent Document 4: Japanese Patent Publication No. 3374243
Patent Document 5: Japanese Patent Publication No. 3548955

### DISCLOSURE OF INVENTION

### PROBLEM TO BE SOLVED BY THE INVENTION

However, according to the conventional techniques, in executing the fuzzy retrieval, manual operation is necessary to determine the range within which the fuzzy retrieval is to be executed and the range for which the fuzzy retrieval does not need to be executed. Whether the range for which the fuzzy retrieval is executed is proper is user dependent. Consequently, the fuzzy retrieval may fail to obtain results desired by the user or may also obtain results not desired by the user. Therefore, a problem arises in that the accuracy of the fuzzy retrieval drops.

According to one aspect, an object of the present invention is to provide a retrieval program, a retrieving apparatus, and a retrieval method that can improve the accuracy of fuzzy retrieval.

### MEANS FOR SOLVING PROBLEM

In one proposal, a retrieval program, a retrieving apparatus, and a retrieval method specify in synonym dictionary data in which similar meaning relations among words are hierarchically classified and coded therein, and specify in each tier, classification codes of a search word that is in a search character string and classification codes of a comparison word in character strings that are for comparison and are in a character string group for comparison; extract from among the specified classification codes of the search word and the specified classification codes of the comparison word, the classification codes in a specific tier of a tier group constituting the synonym dictionary data; judge for each character string for comparison, whether the extracted classification code of the search word and the extracted classification code of the comparison word match; count for the specific tier, a match count of matching classification codes; determine based on the match count, whether a character string for comparison is to be excluded whose classification code of the comparison word for the specific tier is judged not to match the classification code of the search word for the specific tier; calculate based on the specified classification codes of the search word and the specified classification codes of the comparison word in a character string that is for comparison and is not to be excluded, a degree of similarity between the search character string and the character string that is for comparison and is not to be excluded; and output a calculation result.

### EFFECT OF THE INVENTION

According to the retrieval program, the retrieving apparatus, and the retrieval method, the accuracy of fuzzy retrieval can be improved.

### BRIEF DESCRIPTION OF DRAWINGS

FIG. 1 is an explanatory diagram of an example of a data structure of synonym dictionary data;
FIG. 2 is an explanatory diagram of an example of a classification map of a first tier (major classification);
FIG. 3 is an explanatory diagram of an example of a classification map of a second tier (intermediate classification);
FIG. 4 is an explanatory diagram of an example of a classification map of a third tier (minor classification);
FIG. 5 is an explanatory diagram of a link relation between the classification map group and a file group to be used;
FIG. 6 is a block diagram of a hardware configuration of a computer according to an embodiment;
FIG. 7 is a flowchart of a production process of a classification map group M and the classification code file group C;
FIG. 8 is a block diagram of an example of a functional configuration of the retrieving apparatus of the embodiment;
FIG. 9 is a block diagram of an example of a functional configuration of a first retrieval processing unit 804 depicted in FIG. 8;
FIG. 10 is an explanatory diagram of a specific example 1 of a calculation of the degree of similarity executed by a first calculating unit 907;
FIG. 11 is an explanatory diagram of a specific example 2 of a calculation of the degree of similarity executed by the first calculating unit 907;
FIG. 12 is a block diagram of an example of a functional configuration of a second retrieval processing unit 805 depicted in FIG. 8;
FIG. 13 is an explanatory diagram of a specific example 1 of the calculation of the degree of similarity calculated by a second calculating unit 1204;
FIG. 14 is an explanatory diagram of a specific example 2 of the calculation of the degree of similarity executed by the second calculating unit 1204;
FIG. 15 is an explanatory diagram of a specific example 1 of the calculation of the degree of similarity executed by the second calculating unit 1204;
FIG. 16 is an explanatory diagram of a specific example 2 of the calculation of the degree of similarity executed by the second calculating unit 1204;
FIG. 17 is a flowchart of a procedure for a retrieving process executed by a retrieving apparatus 800;
FIG. 18 is a flowchart of an example of detailed process procedure for a first retrieval process (steps S1706 and S1709) depicted in FIG. 17;
FIG. 19 is a flowchart (Part I) of an example of detailed process procedure for a intermediate classification code match result number totaling process (step S1803) depicted in FIG. 18;
FIG. 20 is a flowchart (Part II) of a detailed process procedure for the intermediate classification code match result number totaling process (step S1803) depicted in FIG. 18;
FIG. 21 is a flowchart (Part I) of an example of a detailed process procedure of a similarity degree calculation process (step S1804) depicted in FIG. 18;
FIG. 22 is a flowchart (Part II) of a detailed process procedure of the similarity degree calculation process (step S1804) depicted in FIG. 18;
FIG. 23 is a flowchart (Part I) of an example of a detailed process procedure for a second retrieval process (steps S1707 and S1710) depicted in FIG. 17; and
FIG. 24 is a flowchart (Part II) of a detailed process procedure for the second retrieval process (steps S1707 and S1710) depicted in FIG. 18.

### BEST MODE(S) FOR CARRYING OUT THE INVENTION

An embodiment of a retrieval program, a retrieving apparatus, and retrieval method will be described in detail with reference to the accompanying drawings.

### <Synonym Dictionary Data>

Synonym dictionary data is data indicating relations among words having similar meanings, the relations being hierarchically classified and coded. Synonym dictionary data is also referred to as a "thesaurus". For example, each word therein is coded, and a word conceptually placed in a lower tier is coded with the code of another word in a conceptually higher tier attached at the head of the code thereof.

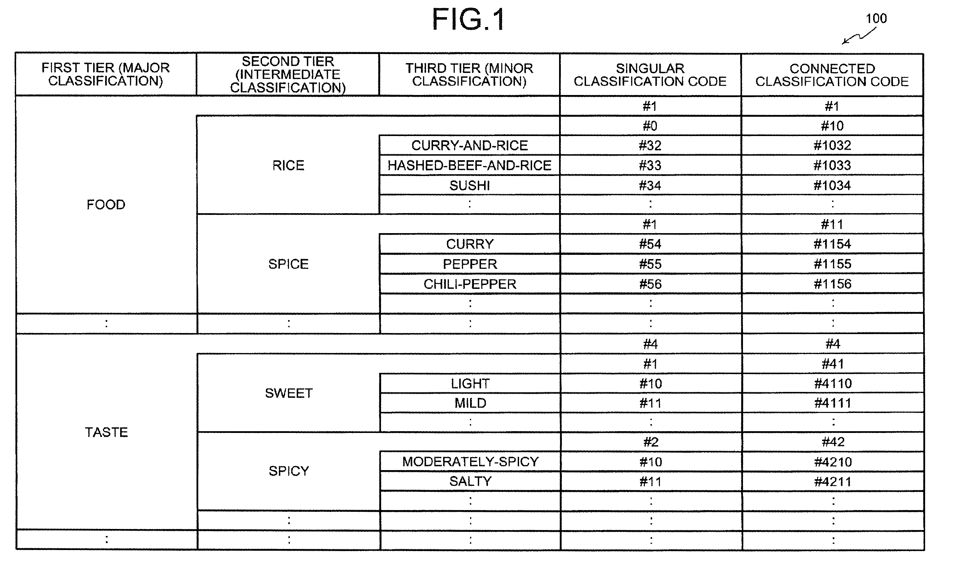

FIG. 1 is an explanatory diagram of an example of a data structure of the synonym dictionary data. In FIG. 1, synonym dictionary data 100 is configured by three tiers as an example. The number of tiers only has to be two or more. In FIG. 1, three tiers are present and therefore, a first tier to be the highest tier is referred to as "major classification"; a second tier to be the intermediate tier is referred to as "intermediate classification"; and a third tier to be the lowest tier is referred to as "minor classification".

For example, a major classification "food" has intermediate classifications "rice" and "spice" (non-depicted intermediate classifications "ramen noodle", etc., also belong to the major classification "food"). The intermediate classification "rice" has minor classifications "curry-and-rice", "hashed-beef-and-rice", and "sushi" (non-depicted minor classifications "Chinese-fried-rice", etc., also belong to intermediate classification "rice").

Two types of classification codes are given to each word. One type is singular classification code and the other is connected classification code. The singular classification code is classification code that is given to each word. The connected code is classification code formed by connecting all the singular classification codes of a word in the higher tiers, to the head of the singular classification code of the word.

For example, the singular classification code of the minor classification "curry-and-rice" is "#32"; the singular classification code of the intermediate classification "rice" in its higher tier is "#0"; and the singular classification code of the major classification "food" that is the higher tier of the intermediate classification "rice" is "#1". Therefore, the connected classification code of "curry-and-rice" is "#1032" formed by sequentially connecting the singular codes from that in the higher tier.

Hereinafter, unless specified otherwise, the "classification code" will refer to the "connected classification code"; connected classification code of the major classification will be referred to as "major classification code"; connected classification code of the intermediate classification will be referred to as "intermediate classification code"; and connected classification code of the minor classification will be referred to as "minor classification code".

The connected classification code is code formed by connecting the singular classification codes of the tiers to each other in descending order of tier. Therefore, singular classification code of each tier can be recognized from the length and the digits of the code. For example, in FIG. 1, the major classification code and the intermediate classification code each have one digit and the minor classification has two digits. Therefore, when the length of a classification code is one, the classification code is a major classification code. When the length of a classification code is two, this classification code is an intermediate classification code. It can also be seen that the digit at the head is a singular classification code of the major classification and the digits at the tail is a singular classification code of the intermediate classification.

When the length of a classification code is four, this classification code is a minor classification code. It can also be seen that the first digit from the head is a singular classification code of the major classification, the second digit is a singular classification code of the intermediate classification, and the two digits at the tail is a singular classification code of the minor classification.

### <Classification Map>

A classification map will be described. The "classification map" is a bit map that extends and expresses bit-map-type full text indexes as a set of bit strings and that with respect to an arbitrary tier of the synonym dictionary data 100, indicates for each file, the presence or absence of words included by the classification code, for each identifier. A group of classification maps for all the tiers is referred to as "classification map group". The number of classification maps present corresponds to the number of tiers that are defined in the synonym dictionary data 100.

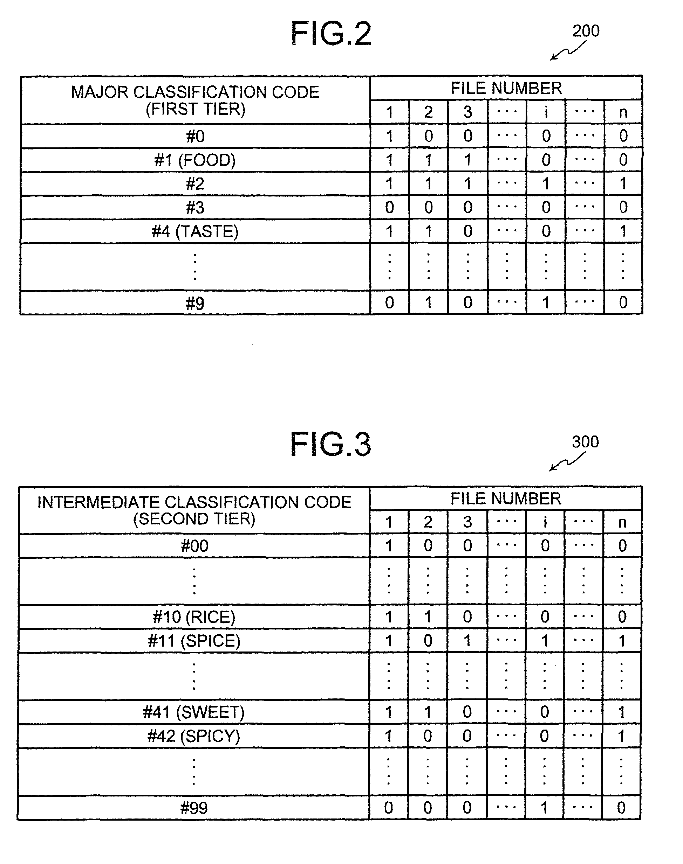

A file to be used is a file having character strings described therein and, for example, a file in the hyper text markup language (HTML) format, the extensible markup language (XML) format, or the text format. The file (group) to be used can be, for example, an electronic dictionary, an electronic book, a webpage, an electronic document, and data including character strings. FIGs. 2 to 4 depict classification maps for files F1 to Fn that are to be used and have the file numbers 1 to n, respectively.

In addition to the words in a given tier, a "word included by the classification code" refers to a conceptually lower word that belongs to a tier that is lower than that of the words in the given tier. For example, in addition to the word that corresponds to each of the connected classification codes in the given tier, a word included by the classification code is, a word that corresponds to a connected classification code in the lower tier to which a singular classification code of the word in the given tier is connected.

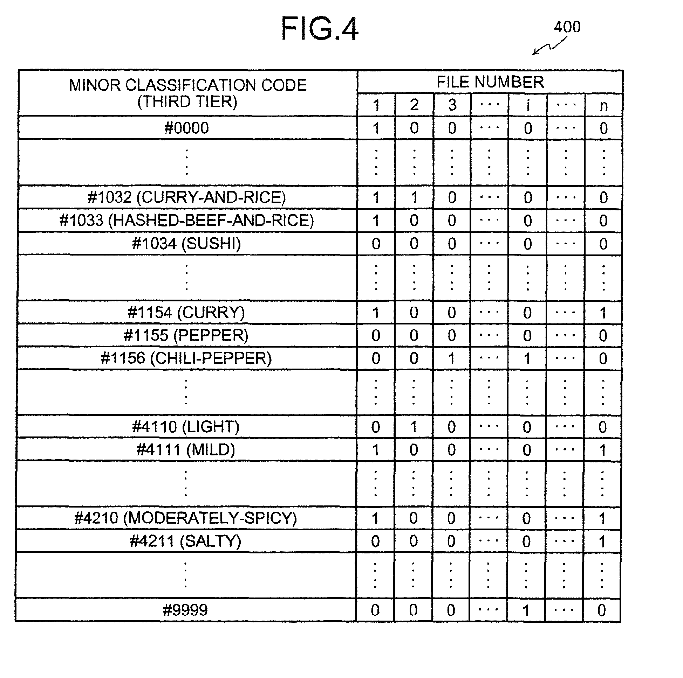

FIG. 2 is an explanatory diagram of an example of the classification map of the first tier (the major classification). FIG. 3 is an explanatory diagram of an example of the classification map of the second tier (the intermediate classification). FIG. 4 is an explanatory diagram of an example of the classification map of the third tier (the minor classification). In FIGs. 2 to 4, concerning the value of a bit indicating the presence or absence of a word that corresponds to a classification code in a file Fi to be used (hereafter, simply referred to as "bit"), "1" is used in this example when the bit is to indicate "presence" and "0" is used when the bit is to indicate "absence".

A classification map (a major classification map) 200 for the major classification codes depicted in FIG. 2 stores bit strings corresponding in number to the number of the files Fi to be used for each major classification. For example, the bits of the files F1 to F3 to be used are each "1" for a major classification code #1 (food) and therefore, it can be seen that a word "food" is present in each of the files F1 to F3 to be used.

However, even in a case where the word that corresponds to the major classification code is not present itself, the value of the bit is "1" if a word is present that is included in the major classification code. For example, for the major classification code #1 (food), even in a case where the word "food" is not present in the file F1 to be used, the value of the bit is "1" if the word "rice" is present which corresponds to an intermediate classification code #10 belonging to the lower tier of the major classification code #1 (food).

Similarly, for the major classification code #1 (food), the value of the bit is "1" if the word "curry-and-rice" is present which corresponds to the minor classification code #1032 belonging to the lower tier of the major classification code #1 (food).

A classification map (an intermediate classification map) 300 for the intermediate classification codes depicted in FIG. 3 stores bit strings for the number of the files Fi to be used, for each intermediate classification. For example, for an intermediate classification code #10 (rice), the bit indicates "1" of each of the files F1 and F2 to be used and therefore, the word "rice" can be recognized to be present in each of the files F1 and F2 to be used.

However, even in a case where the word that corresponds to the intermediate classification code itself is not present, the value of the bit is "1" if a word is present that is included in the intermediate classification code. For example, for the intermediate classification code #10 (rice), even in a case where the word "rice" is not present in the file F1 to be used, the value of the bit is "1" if the word "curry-and-rice" is present that corresponds to the minor classification code #1032 belonging to the lower tier of the intermediate classification code #10 (rice).

A classification map (a minor classification map) 400 for the minor classification codes depicted in FIG. 4 stores bit strings corresponding in number to the number of the files Fi to be used, for each minor classification. For example, for the minor classification code #1032 (curry-and-rice), the bit indicates "1" for each of the files F1 and F2 to be used and therefore, the word "curry-and-rice" can be recognized to be present in each of the files F1 and F2 to be used.

### <Link Relation between Classification Map Group and File Group to Be Used>

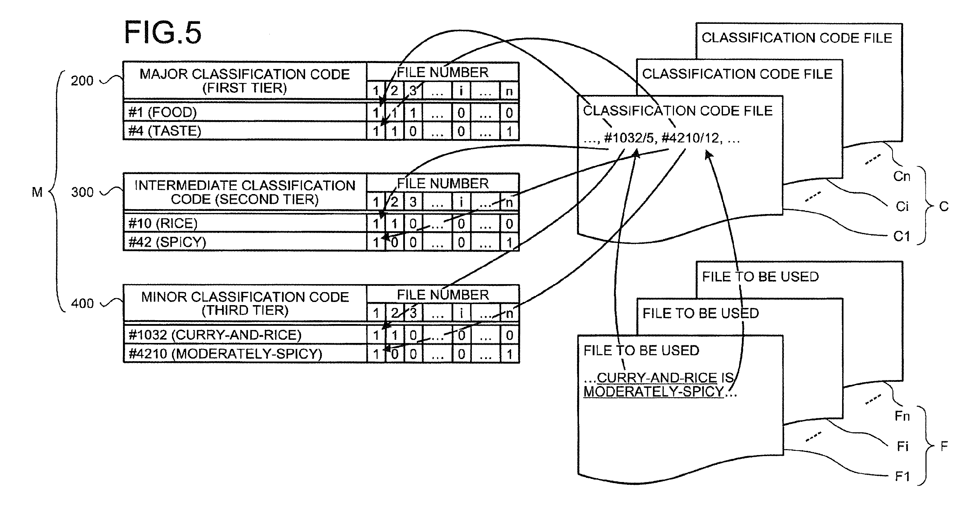

FIG. 5 is an explanatory diagram of a link relation between the classification map group and a file group to be used. The classification map group M and a file group F to be used are linked to each other by a classification code file group C. A "classification code file Ci" is a file that has classification codes corresponding to the words present in the file Fi to be used, and in which the appearance positions are described for each file Fi to be used.

In this one example, the file Fi and the classification code file Ci each having the same file number "i" correspond to each other. For example, the file F1 to be used and a classification code file C1 correspond to each other. "Appearance position" is information that specifies the description position in the file to be used and can be, for example, the number of characters counted from the character at the head in the file to be used.

For example, in FIG. 5, when a character string "The curry-and-rice is moderately-spicy" is described in the file F1 to be used, "#1032/5" formed by combining the classification code "#1032" of "curry-and-rice" and "5" indicating the appearance position thereof, is described in the classification code file C1 that corresponds to the file F1 to be used. It can be seen that "curry-and-rice" is described starting at the fifth character from the character at the head of the file F1 to be used.

Similarly, in the classification code file C1, "#4210/12" formed by combining the classification code "#4210" of "moderately-spicy" and "12" indicating the appearance position thereof is described. It can be seen that "moderately-spicy" is described starting at the twelfth character from the character at the head of the file F1 to be used. The presence of the link relation enables a first specifying unit 902 or a second specifying unit 1203 (described later) to specify classification code from a word in the file Fi to be used.

Embedding special code in each classification code file Ci enables definition of a range for the comparison of a search word that is searched for, for retrieval. For example, when the file group F to be used is dictionary data, for a headword and the words in the text that describes the headword, classification code and the appearance position are described and line feed code is embedded at the tail as the special code. Thereby, a classification code group for the headword and the description text thereof described between a line feed code and the next line feed code is the range for comparison of the search word. If no special code is embedded, each classification code is the range for the comparison.

### <Example of Hardware Configuration of Computer>

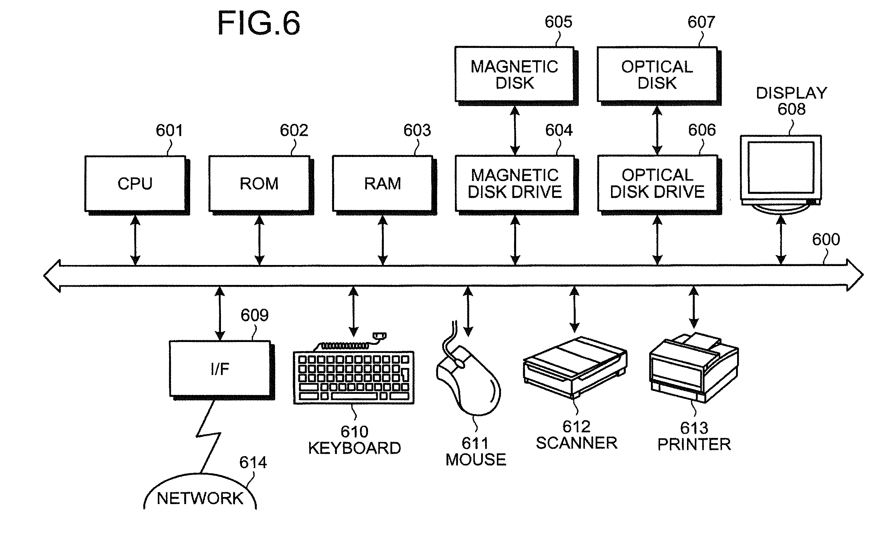

FIG. 6 is a block diagram of a hardware configuration of a computer according to the embodiments. As depicted in FIG. 6, the computer includes a central processing unit (CPU) 601, a read-only memory (ROM) 602, a random access memory (RAM) 603, a magnetic disk drive 604, a magnetic disk 605, an optical disk drive 606, an optical disk 607, a display 608, an interface (I/F) 609, a keyboard 610, a mouse 611, a scanner 612, and a printer 613, respectively connected by a bus 600.

The CPU 601 governs overall control of the computer. The ROM 602 stores therein programs such as a boot program. The RAM 603 is used as a work area of the CPU 601. The magnetic disk drive 604, under the control of the CPU 601, controls the reading and writing of data with respect to the magnetic disk 605. The magnetic disk 605 stores therein data written under control of the magnetic disk drive 604.

The optical disk drive 606, under the control of the CPU 601, controls the reading and writing of data with respect to the optical disk 607. The optical disk 607 stores therein data written under control of the optical disk drive 606, the data being read by a computer.

The display 608 displays, for example, data such as text, images, functional information, etc., in addition to a cursor, icons, and/or tool boxes. A cathode ray tube (CRT), a thin-film-transistor (TFT) liquid crystal display, a plasma display, etc., may be employed as the display 608.

The I/F 609 is connected to a network 614 such as a local area network (LAN), a wide area network (WAN), and the Internet through a communication line and is connected to other apparatuses through the network 614. The I/F 609 administers an internal interface with the network 614 and controls the input/output of data from/to external apparatuses. For example, a modem or a LAN adaptor may be employed as the I/F 609.

The keyboard 610 includes, for example, keys for inputting letters, numerals, and various instructions and performs the input of data. Alternatively, a touch-panel-type input pad or numeric keypad, etc. may be adopted. The mouse 611 is used to move the cursor, select a region, or move and change the size of windows. A track ball or a joy stick may be adopted provided each respectively has a function similar to a pointing device.

The scanner 612 optically reads an image and takes in the image data into the computer. The scanner 612 may have an optical character reader (OCR) function as well. The printer 613 prints image data and text data. The printer 613 may be, for example, a laser printer or an ink jet printer.

### <Production Process of Classification Map Group M and Classification Code File Group C>

A production process of the classification map group M and the classification code file group C will be described. The production process may be executed by the retrieving apparatus of this embodiment or may be executed by a producing apparatus that is different from the retrieving apparatus. In either case, the production process is executed by a computer that has a production program of this embodiment installed therein.

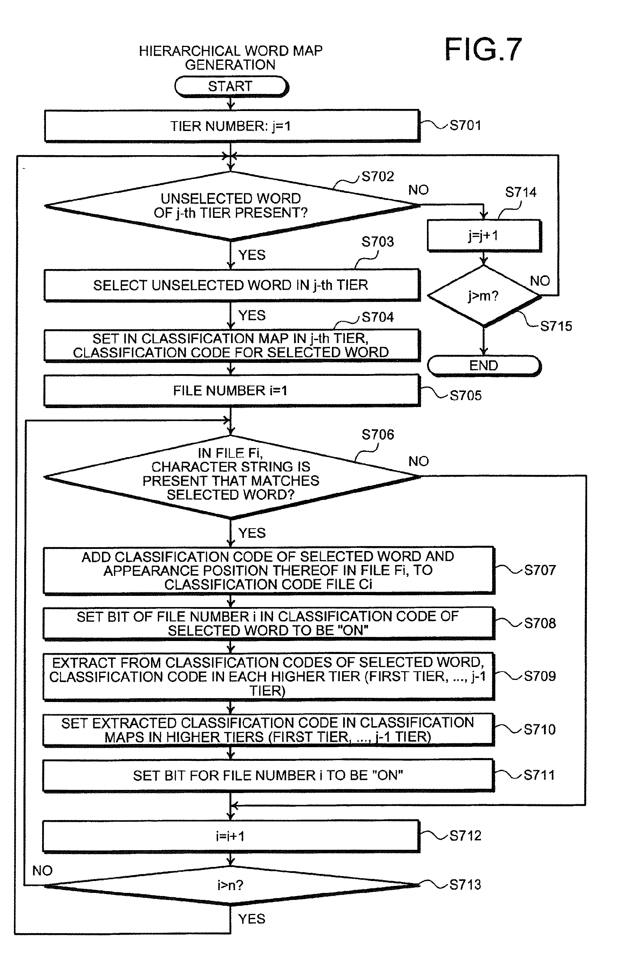

FIG. 7 is a flowchart of the production process of the classification map group M and the classification code file group C. The computer sets the tier number j of the synonym dictionary data 100 to be j=1 (step S701). The computer determines whether an unselected word in a j-th tier is present in the synonym dictionary data 100 (step S702). If the computer determines that an unselected word is present (step S702: YES), the computer selects an unselected word in the j-th tier (step S703).

The computer sets in a classification map in the j-th tier, classification code for the selected word (step S704). The computer sets the file number i of the file Fi to be used to be i=1 (step S705). The computer scans the file Fi to be used and thereby, determines whether a character string is present that matches the selected word (step S706). If the computer determines that no character string is present that matches the selected word (step S706: NO), the computer progresses to the operation at step S712. Thereby, the computer progresses to the next file to be used.

On the other hand, if the computer determines that a character string is present that matches the selected word (step S706: YES), the computer adds the classification code of the selected word and the appearance position thereof in the file Fi to be used, to the classification code file Ci (step S707).

In the classification map for the j-th tier, the computer sets the bit of the file number i in the classification code of the selected word to be ON ("1") (step S708). The computer extracts from the classification code of the selected word, classification code in each tier higher than the j-th tier (step S709).

As described above, the classification code in the j-th tier includes classification codes in the higher tiers (the first tier, ..., the (j-1)th tier). For example, the two digits at the head of the minor classification code "#1032" (curry-and-rice) in the third tier form the intermediate classification code and therefore, the code of the two digits at the head is extracted as the intermediate classification code "#10" (rice) to be in the second tier. Similarly, the one digit at the head of the minor classification code "#1032" (curry-and-rice) is the major classification code and therefore, the code of the one digit at the head is extracted as the major classification code "#1" (food) to be in the first tier.

The computer sets the classification code extracted at step S709, in the classification maps in the tiers higher than the j-th tier (step S710). For example, in the above example, for the intermediate classification code "#10" (rice), the intermediate classification code "#10" (rice) is set in the classification map for the intermediate classification. Similarly, for the major classification code "#1" (food), the major classification code "#1" (food) is also set in the classification map for the major classification. If the code is already set therein, no such setting is executed.

In the extracted classification code that is set in the classification maps in the higher tiers at step S710, the computer sets the bit for the file number i to be ON ("1") (step S711). If the bit is already set to be ON, no such setting is executed.

The computer increments the file number i (step S712) and determines whether i is i>n (step S713). "n" is the total number of files in the file group F to be used. If the computer determines that i is not i>n (step S713: NO), the computer returns to the operation at step S706 and determines whether in the file Fi to be used, a character string is present that matches the selected word.

If the computer determines that i is i>n (step S713: YES), the computer returns to the operation at step S702 and determines whether an unselected word in the j-th tier is present in the synonym dictionary data 100 (step S702). If the computer determines that no unselected word in the j-th tier is present (step S702: NO), the computer increments the tier number j (step S714) and determines whether j is j>m (step S715). "m" is the number of tiers. If the synonym dictionary data 100 as depicted in FIG. 1 is used, m is m=3.

If the computer determines that j is not j>m (step S715: NO), the computer returns to the operation at step S702 and determines whether an unselected word in the j-th tier is present in the synonym dictionary data 100 (step S702). On the other hand, if the computer determines that j is j>m (step S715: YES), the production process of the classification map group M and the classification code file group C comes to an end.

The execution of the production process of the classification map group M and the classification code file group C consequently causes the classification map group M and the classification code file group C specific to the file group F to be used, to be automatically produced.

### <Example of a functional configuration of Retrieving Apparatus>

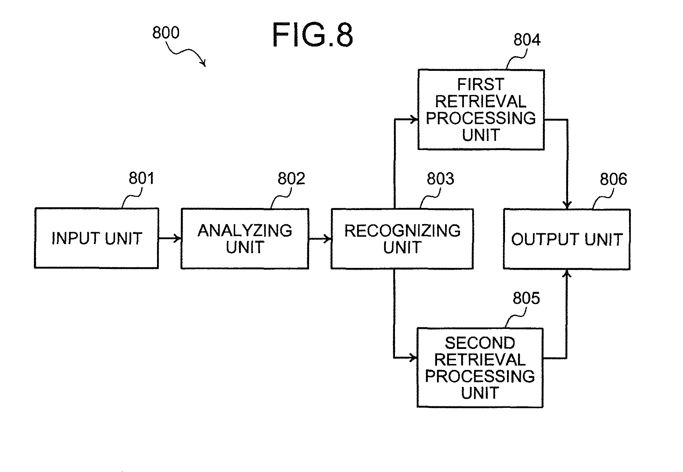

FIG. 8 is a block diagram of an example of a functional configuration of the retrieving apparatus of the embodiment. In FIG. 8, a retrieving apparatus 800 includes an input unit 801, an analyzing unit 802, a recognizing unit 803, a first retrieval processing unit 804, a second retrieval processing unit 805, and an output unit 806. Functions of the units from the input unit 801 to the output unit 806 are implemented, for example, by causing the CPU 601 to execute programs stored in a storing apparatus such as the ROM 602, the RAM 603, the magnetic disk 605, or the optical disk 607 that are depicted in FIG. 6, or by using the I/F 609.

The input unit 801 receives an input of a character string that is to be searched for and designation of a mode for the retrieval. The "mode for the retrieval" refers to a retrieval process type and is any one among, a retrieval process that is based on higher tier classification codes described later (a first retrieval mode) and another retrieval process of retrieving from the classification codes in the lowest tier (a second retrieval mode).

The analyzing unit 802 analyzes the character string that is to be searched for and that has been input thereto by the input unit 801. For example, the analyzing unit 802 executes morphological analysis; and thereby, separates the character string into words; and specifies the word class of each of the words. The analyzing unit 802 extracts as the search words and extracts from a word group resulting from the separation of the character string, words that correspond to any one among word classes used in the fuzzy retrieval such as, for example, a noun, a verb, an adjective, and an adverb. The analyzing unit 802 similarly analyzes a comparison character string.

The recognizing unit 803 recognizes which retrieval process a designated retrieval mode corresponds to. If no retrieval mode is designated, the recognizing unit 803 recognizes whether the number of search words analyzed by the analyzing unit 802 is equal to or larger than the predetermined number of words. If the recognizing unit 803 recognizes that the number of search words is smaller than the predetermined number of words, the first retrieval mode is designated and, if the recognizing unit 803 recognizes that the number of search words is equal to or larger than the predetermined number of words, the second retrieval mode is designated.

The retrieving apparatus 800 executes the retrieval process in the retrieval mode recognized by the recognizing unit 803. In this manner, if the number of search words is large, the number of hits as the result of the fuzzy retrieval may be tremendous and therefore, the retrieving apparatus 800 increases stepwise the tiers for the retrieval from the designated tier.

The first retrieval processing unit 804 executes the retrieval process based on the higher tier classification codes. In the retrieval process that is based on the higher tier classification codes, a synonym vector is produced that is specific to a search character string, the synonym vector being produced using the classification codes of the search words in the search character string, and the classification codes of the words in the higher tier including the search words. Similarly, for the comparison words that are for comparison and in the character string for comparison, another synonym vector that is specific to the comparison character string is also produced using the classification codes of the comparison words and the classification codes of the words in the higher tier including the comparison words. The first retrieval processing unit 804 calculates these two synonym vectors based on a kernel method and thereby, calculates the degree of similarity between the search character string and the character string for comparison. The details of this calculation will be described later.

The second retrieval processing unit 805 executes a retrieval process of retrieving from the classification codes in the lowest layer. In the retrieval process of retrieving from the classification codes in the lowest layer, a synonym vector that is specific to the search character string, is produced using the classification codes of the words that are to be searched for and that are in the search character string. Similarly, for the comparison words in the character string for comparison, another synonym vector that is specific to the character string for comparison, is also produced using the classification codes of the comparison words. The second retrieval processing unit 805 calculates these two synonym vectors based on a kernel method and thereby, calculates the degree of similarity between the search character string and the character string for comparison.

In this case, if the total number of character strings having the degree of similarity equal to or higher than a predetermined degree of similarity is smaller than the predetermined number, classification code in the tier that is one tier higher is specified for the search character string and the character string for comparison; the specified classification code is added to each of the two synonym vectors; and the degree of similarity is calculated in the same manner. In this manner, the second retrieval processing unit 805 reproduces the synonym vectors and calculates the degree of similarity in a tier one tier higher than the current tier, until the total number of character strings for comparison and each having a degree of similarity equal to or higher than the predetermined degree of similarity, is equal to or larger than the predetermined number. The details of the calculation will be described later.

The output unit 806 outputs the retrieval result of the first retrieval processing unit 804 or the second retrieval processing unit 805. For example, the output unit 806 displays the ranks of the character strings for comparison, in descending order of degree of similarity. The form of the output by the output unit 806 is not limited to the output to the display 608 and may be transmission to another communicable computer, may also be output for printing, or may also be an output for writing to a storage area in the retrieving apparatus 800.

The retrieving apparatus 800 may include the input unit 801, the analyzing unit 802, the first retrieval processing unit 804, and the output unit 806, or may also include the input unit 801, the analyzing unit 802, the second retrieval processing unit 805, and the output unit 806.

### <Example of a functional configuration of First Retrieval Processing Unit 804>

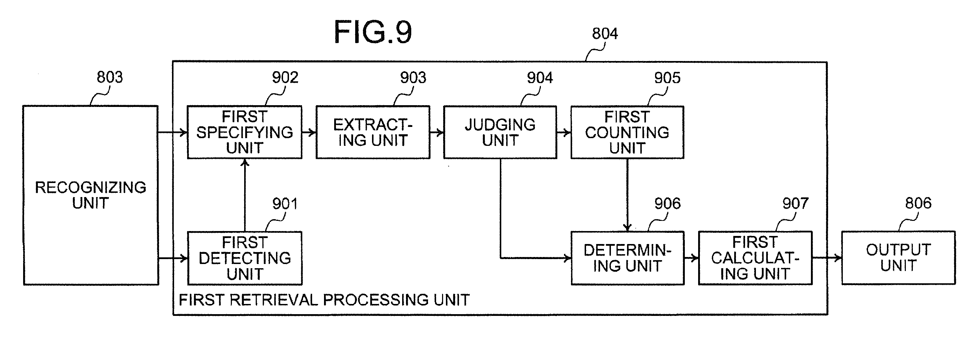

FIG. 9 is a block diagram of an example of a functional configuration of the first retrieval processing unit 804 depicted in FIG. 8. The first retrieval processing unit 804 includes a first detecting unit 901, a first specifying unit 902, an extracting unit 903, a judging unit 904, a first counting unit 905, a determining unit 906, and a first calculating unit 907.

The first detecting unit 901 refers to the classification map for the highest tier of the classification map group M that has, for each tier, the sets of bit strings clarified therein and each indicating for the file Fi to be used, the presence or the absence of the word corresponding to each classification code in the synonym dictionary data 100, and detects a specific file that is to be used and that has classification codes present therein, in the highest tier to which the search word belongs.

"Tiers to which the search word belongs" include, in addition to the tier having the classification code of the search word present therein, tiers that are higher than the tier specified by the classification code. These tiers are referred to as "belonging tiers". The first detecting unit 901 detects a specific file to be used, from the classification map in the highest tier tracing back to the classification codes in the highest tier including the classification code of the search word.

For example, if the search word is "food", the classification code thereof is the major classification code "#1" and therefore, the first detecting unit 901 refers to the bit string of "#1" in the major classification map 200 and thereby, detects the specific files F1 to F3 to be used.

If the search word is "spicy", the classification code thereof is the intermediate classification code "#4". The intermediate classification code "#42" belongs to a major classification code "#4" (taste) and therefore, the first detecting unit 901 refers to the bit string of "#4" in the major classification map 200 and detects the specific files F1, F2, and Fn to be used.

If the search word is "curry-and-rice", the classification code thereof is the minor classification code "#1032". This minor classification code "#1032" belongs to the major classification code "#1" (food) and therefore, the first detecting unit 901 refers to the bit string of "#1" in the major classification map 200 and thereby, detects the specific files F1 to F3 to be used. In this manner, irrespective of the tier of the classification code of the word searched for, the file Fi to be used can be narrowed down to in the smallest range necessary by tracing back to the highest tier.

If the search words are "food" and "taste", the classification codes thereof are the major classification codes "#1" and "#4" and therefore, the first detecting unit 901 refers to the bit strings of "#1" and "#4" in the major classification map 200. The first detecting unit 901 detects the files F1 and F2 to be used, of the file numbers for each of which "ON" is indicated in the bit strings of "#1" and "#4", as the specific files to be used.

If the search words are "food" and "spicy", the classification code of the search word "food" is the major classification code "#1" and therefore, the first detecting unit 901 refers to the bit string of "#1" in the major classification map 200. On the other hand, the classification code of the search word "spicy" is an intermediate classification code "#42". The intermediate classification code "#42" belongs to the major classification code "#4" (taste) and therefore, the first detecting unit 901 refers to the bit string of "#4" in the major classification map 200. The first detecting unit 901 detects the files F1 and F2 to be used, of the file numbers for each of which "ON" is indicated in the bit strings of "#1" and "#4", as the specific files to be used.

In this manner, when plural search words are present, a logical AND of the bit strings of the classification codes in the highest tier is acquired and thereby, the file Fi to be used can be acquired by narrowing down. The first detecting unit 901 can narrow down the retrieval destination of the fuzzy retrievals executed thereafter, to the specific file Fi to be used and therefore, wasteful retrieval from the file Fi to be used can be prevented, thereby facilitating an increase of the speed of the retrieval process. If the retrieving apparatus 800 is unable to access the classification map group M, the words in all the files F1 to Fn to be used are to be subject to comparison.

The first specifying unit 902 specifies in the synonym dictionary data 100 having the similar meaning relations among the words hierarchically classified and coded therein, and specifies in each tier, classification codes of the search words that are to be searched for and are in the search character string, and classification codes of the comparison words in each character string for comparison in the character string group for comparison. For example, the first specifying unit 902 specifies the classification codes in the synonym dictionary data 100 depicted in FIG. 1.

The specification of the classification codes of the search words, with respect to each tier of will be described. The first specifying unit 902 refers to the synonym dictionary data 100 and specifies the classification codes of the search words in the search character string and the tier thereof. The "search words in the search character string" are the words that are formed consequent to the analyzing unit 802 separating the character string input by the input unit 801 into words and extracting from among the words, corresponding words.

If the tier of the classification code is not the highest tier, the first specifying unit 902 specifies the classification codes in the higher tiers each including the classification codes of the tier, including those up to the highest tier. For example, if the search word is "curry-and-rice", the tier thereof is the third tier (the minor classification) and the minor classification code thereof is "#1032". The two digits at the head of the minor classification code is the intermediate classification code and therefore, the first specifying unit 902 specifies "#10" as the intermediate classification code. The one digit at the head of the minor classification code is the major classification code and therefore, the first specifying unit 902 specifies "#1" as the major classification code.

In this manner, from the search word ""curry-and-rice", the minor classification code "#1032", the intermediate classification code "#10", and the major classification code "#1" are specified as the classification codes in the belonging tiers (the first tier to the third tier). This manner of specification is similarly used for the comparison word.

The character string(s) for comparison is/are one or more character string(s) (each sectioned by, for example, a comma or a line feed code) described in a comparison unit. The comparison unit may be a single search word or may be one or more files Fi to be used. When the first detecting unit 901 performs narrowing down to a specific file Fi to be used, only the character string in the specific file Fi is used for retrieval.

The character string for comparison may be for each given item in a given file Fi to be used. If the file Fi to be used is the dictionary data, a character string to be a headword and the description text thereof is set to be a comparison unit and each of the words in the character string is set to be a comparison word.

The extracting unit 903 extracts classification codes in a specific tier of a tier group constituting the synonym dictionary data 100, from among search word classification codes in each tier and comparison word classification codes in each tier, respectively specified by the first specifying unit 902. The "specific tier" refers to, for example, an intermediate tier. The "intermediate tier" is any one of the tiers (a group thereof) that does not include at least the highest tier and the lowest tier.

In this example, the first tier to the third tier are present and therefore, the second tier is the intermediate tier. If the first tier to a fifth tier are present, the tiers that can be selected as an intermediate tier are the second tier alone; the third tier alone; the fourth tier alone; the second tier and the third tier; the third tier and the fourth tier; and the second tier to the fourth tier. The tier(s) that is/are to be used as the intermediate tier(s) is set in advance. In this example, the specific tier is used as the intermediate tier. However, when the retrieval is desired to be executed for only a certain tier as a target, the tiers (a group thereof) including the highest tier and the lowest tier may be used as the specific tiers.

Therefore, when the search word is "curry-and-rice", the minor classification code "#1032", the intermediate classification code "#10", and the major classification code "#1" are specified and therefore, the intermediate classification code "#10" is extracted.

Similarly, when the search word is "hashed-beef-and-rice", the minor classification code "#1033", the intermediate classification code "#10", and the major classification code "#1" are specified and therefore, the intermediate classification code "#10" is extracted.

The extracting unit 903 also extracts the classification codes of the word to be extracted and the comparison word in the higher tier that is higher than the intermediate tier. In both of the examples of "curry-and-rice" and "hashed-beef-and-rice", the extracting unit 903 extracts the major classification code "#1".

The judging unit 904 judges for each character string for comparison whether the classification code (extracted by the extracting unit 903) of the search word in the specific tier and the extracted classification code of the comparison word in the specific tier match each other. For example, the judging unit 904 judges the matching between the classification code of the search word in the intermediate tier and the classification code of the comparison word in the intermediate tier. In both of the examples of "curry-and-rice" and "hashed-beef-and-rice", the intermediate classification code is "#10" and therefore, a match is established.

A case may be present where plural search words in the search character string are present. In this case, the judging unit 904 judges the matching for each search word. For example, if three intermediate classification codes of the search words are present and one intermediate classification code of the comparison word is present, the judging unit 904 judges the matching therebetween three times. In contrast, a case may be present where plural comparison words in the character string for comparison are present. In this case, the judging unit 904 judges the matching for each search word. For example, if one intermediate classification code of the search word is present and four intermediate classification codes of the comparison words are present, the judging unit 904 judges the matching four times.

A case may be present where plural search words and plural comparison words are present. In this case, the judging unit 904 judges the matching of each of the comparison words, with each of the search words. For example, when two intermediate classification codes of the search words are present and three intermediate classification codes of the comparison words are present, the judging unit 904 judges the matching six times.

In the judgment of the matching between the classification codes in the intermediate tier of the search words in the search character string and the classification codes in the intermediate tier of the comparison words in the comparison unit, if a match is established for each of the combinations of the search words and the comparison words, the judging unit 904 judges that a match is established between the search character string and the character string for comparison in the comparison unit. If a match is established for some of the combinations of the search words and the comparison words, the judging unit 904 may judge that a match is established between the search character string and the character string for comparison in the comparison unit.

If a match is established for none of the combinations of the search words and the comparison words, the judging unit 904 judges that no match is established between the search character string and the character string for comparison in the comparison unit. For a case where a match is established for some of the combinations, whether judgment is to be that a match is established or no match is established between the search character string and the character string for comparison in the comparison unit, is set in advance.

The judging unit 904 may judge the matching of the classification codes in the higher tier between the search words and the comparison words before judging the matching of the classification codes in the intermediate tier between the search words and the comparison words. If a match is established, the judging unit 904 judges the matching between the classification codes in the intermediate tier and, if no match is established, does not judge the matching therebetween.

For example, in the examples of "curry-and-rice" and "hashed-beef-and-rice", the major classification codes thereof are both "#1" and therefore, the judging unit 904 judges the matching between the intermediate classification codes thereof. In this case, similar to the description above, plural search words in the search character string may be present. In such a case, the judging unit 904 judges the matching for each of the search words.

For example, when three major classification codes of the search words and one major classification code of the comparison word are present, the judging unit 904 judges the matching for three times. In contrast, plural words may be present to be compared with in the character string for comparison. In this case, the judging unit 904 judges the matching for each of the search words. For example, when one major classification code of the search word and four major classification codes of the comparison words are present, the judging unit 904 judges the matching for four times.

Plural search words and plural comparison words may be present. In this case, the judging unit 904 judges the matching of each of the comparison words, with each of the search words. For example, when two major classification codes of the search words and three major classification codes of the comparison words are present, the judging unit 904 judges the matching for six times.

In the case where the judging unit 904 judges for plural times in the higher tier, the matching of the classification codes between the search words and the comparison words, only when a match is established in each of the judgment sessions, the judging unit 904 judges the matching of the classification codes in the intermediate tier between the search words and the comparison words. Even if a match is established for some of the judgment sessions, the judging unit 904 may judge in the intermediate tier, the matching of the classification codes between the search words and the comparison words. If no match is established in any of the judgment sessions, the judging unit 904 does not judge the matching of the classification codes between the search words and the comparison words, in the intermediates tier. The handling of a case where a match is established in some of the judgment sessions is set in advance.

In any case, when the classification codes in the higher tier do not match therebetween, it can be considered that the similarity is not established in the tiers lower than that tier and therefore, execution of the judgment of the matching for the classification codes in the higher tier enables avoidance of wasteful retrieval and facilitates improvement of the retrieval efficiency.

The first counting unit 905 counts the number of established matches for the specific tier as judged by the judging unit 904. The number of established matches (established match count) counted by the first counting unit 905 is the total number of the established matches for the file group F to be used and subject to comparison. For example, the files may be all the files to be used or a specific file Fi to be used that is detected by the first detecting unit 901. As to the counting unit used by the first counting unit 905, one point is counted when a match is established of the classification codes in the intermediate tier between the search word and the comparison word.

In the intermediate tier of the word to be compared, if at least one classification code that matches the classification code in the intermediate tier of the search word is present in the comparison unit, one point may be counted. If the classification codes in the intermediate tier of all the comparison words in the comparison unit match the classification codes in the intermediate tier of the search words, one point may be counted. The counting method to be employed is determined according to the judgment of the match executed by the judging unit 904.

The determining unit 906 determines whether the character string for comparison and for which the judging unit 904 judges that classification codes thereof do not match the classification codes in each tier of the comparison word, is to be excluded based on the established match count counted by the first counting unit 905. For example, a threshold value is set in the determining unit 906 and the determining unit 906 determines if the established match count for the intermediate tier is equal to or larger than the threshold value. The determining unit 906 determines whether the character string for comparison (whose classification codes in the intermediate tier do not match) is used for the calculation by the first calculating unit 907, based on whether the established match count is equal to or larger than the threshold value.

If the determining unit 906 determines that the established match count is equal to or larger than the threshold value, sufficient synonyms are included and therefore, the comparison word whose classification code in the intermediate tier establishes no match does not need to be used in the fuzzy retrieval (used in the calculation executed by the first calculating unit 907). Therefore, when the established match count is equal to or larger than the threshold value, the determining unit 906 excludes from the character strings for the fuzzy retrieval, the character string that is for comparison and whose classification codes in the intermediate tier do not establish a match.

On the other hand, if the determining unit 906 determines that the established match count is smaller than the threshold value, it is considered that the synonyms are few and therefore, the character string whose classification codes in the intermediate tier establish no match needs to be included in the character strings for the fuzzy retrieval. Therefore, when the established match count is smaller than the threshold value, the determining unit 906 does not exclude from the character strings for the fuzzy retrieval, the character string whose classification codes in the intermediate tier establish no match.

The first calculating unit 907 calculates the degree of similarity between the search character string and the character string that is for comparison and that the determining unit 906 determines not to exclude, based on the classification code in each tier of the comparison word in the character string for comparison and that the determining unit 906 determines not to exclude. The first calculating unit 907 also calculates the degree of similarity between the search character string and the character string for comparison whose classification codes are determined by the determining unit 906 to match. In any case, the first calculating unit 907 calculates the degree of similarity using the kernel method. The calculation result is delivered to the output unit 806. A specific example will be described.

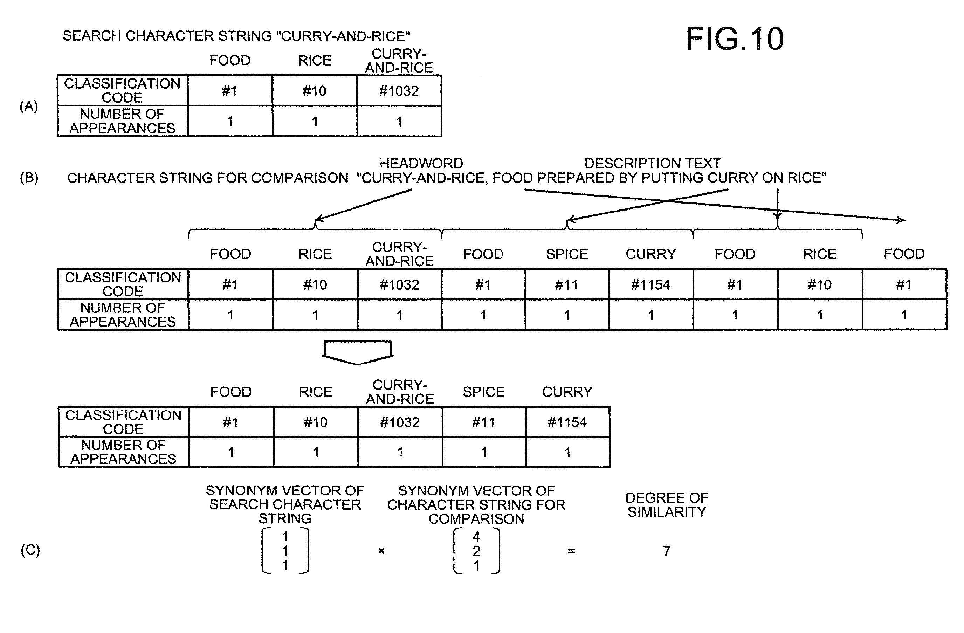

FIG. 10 is an explanatory diagram of a specific example 1 of the calculation of the degree of similarity executed by the first calculating unit 907. The specific example 1 is an example where one word that is a search character string is compared with the character string for comparison. In the specific example 1, it is assumed that the search word is "curry-and-rice"; and the character string for comparison, to be the comparison unit is "curry-and-rice", which is the headword in the dictionary and "a food prepared by putting curry on rice" is the description text thereof.

In (A), the first specifying unit 902 acquires the classification codes "#1", "#10", and "#1032" of the search word "curry-and-rice" by tier. The search word is only "curry-and-rice" and therefore, the number of appearances of each of the classification codes "#1", "#10", and "#1032" is one.

In (B), for the character string for comparison "curry-and-rice. A food prepared by putting curry on rice.", "curry-and-rice", "curry", "rice", and "food" are extracted by the morphological analysis and the word extraction executed by the analyzing unit 802. The classification code by tier is acquired by the first specifying unit 902 for each of the extracted words.

In this example, the number of appearances of the major classification code "#1" (food) is four; the number of appearances of the intermediate classification code "#10" (rice) is two; the number of appearances of the minor classification code "#1032" (curry-and-rice) is one; the number of appearances of the intermediate classification code "#11" (spice) is one; and the number of appearances of the minor classification code "#1154" (curry) is one. The number of appearances is excluded of each of the classification codes "#11" (spice) and "#1154" (curry) that do not match the classification codes of the search word.

In (C), the first calculating unit 907 converts each number of appearances acquired in (A) into a vector. This vector is referred to as "synonym vector of the search character string". Similarly, the first calculating unit 907 converts each number of appearances acquired in (B) into a vector. This vector is referred to as "synonym vector of the character string for comparison". The first calculating unit 907 calculates the degree of similarity by acquiring the inner product of these synonym vectors. In (C), the degree of similarity is seven.

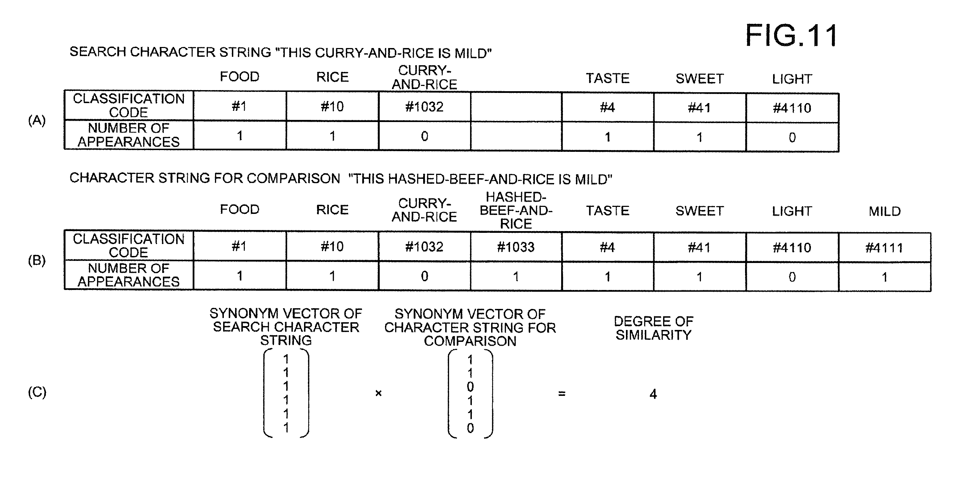

FIG. 11 is an explanatory diagram of a specific example 2 of the calculation of the degree of similarity executed by the first calculating unit 907. The specific example 2 is an example where the search character string and the character string for comparison are compared with each other. In the specific example 2, it is assumed that the search character string to be the comparison unit is "This curry-and-rice is mild", and the character string for comparison is "This hashed-beef-with-rice is mild".

In (A), for the search character string "This curry-and-rice is mild", "curry-and-rice" and "mild" are extracted by the morphological analysis and the word extraction executed by the analyzing unit 802. For each of the extracted words, the first specifying unit 902 acquires the classification code by tier. In the search character string, the number of appearances of each of the extracted words is one and therefore, the number of appearances of each of the classification codes "#1", "#10", "#1032", "#4", "#41", and "#4110" is one.

In (B), for the character string for comparison "This hashed-beef-and-rice is mild", "hashed-beef-and-rice" and "mild" are extracted by the morphological analysis and the word extraction executed by the analyzing unit 802. For each of the extracted words, the first specifying unit 902 acquires the classification code by tier. In the character string for comparison, the number of appearances of each of the extracted words is one and therefore, the number of appearances of each of the classification codes "#1", "#10", "#1033", "#4", "#41", and "#4111" is one.

"#1032" (curry-and-rice) and "#4110" (light) do not appear in the character string for comparison and therefore, the number of appearances thereof is zero. The number of appearances of each of the classification code "#1033" (hashed-beef-and-rice) and "#4111" (mild) are excluded that do not match with classification code of the search word.

In (C), the first calculating unit 907 converts each number of appearances acquired in (A) into a vector. This vector is referred to as "synonym vector of the search character string". Similarly, the first calculating unit 907 converts each number of appearances acquired in (B) into a vector. This vector is referred to as "synonym vector of the character string for comparison". The first calculating unit 907 calculates the degree of similarity by acquiring the inner product of these synonym vectors. In (C), the degree of similarity is four. The details of the second retrieval processing unit 805 will be described.

### <Example of a functional configuration of Second Retrieval Processing Unit 805>

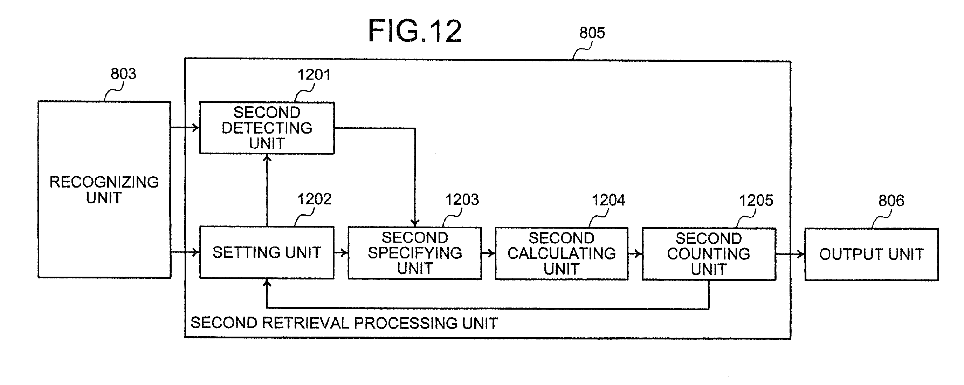

FIG. 12 is a block diagram of an example of a functional configuration of the second retrieval processing unit 805 depicted in FIG. 8. The second retrieval processing unit 805 includes a second detecting unit 1201, a setting unit 1202, a second specifying unit 1203, a second calculating unit 1204, and a second counting unit 1205.

The second detecting unit 1201 refers to the classification map group M that for each tier, has sets of bit strings clarified therein, each indicating for each file to be used, the presence or the absence of the words corresponding to the classification codes in the synonym dictionary data 100, and detects the specific file Fi that is to be used and that has the classification codes in the tier to be used of the search words present therein.

For example, for the synonym dictionary data 100 of FIG. 1, the lowest layer is the third tier. For example, when the tier to be used is the third tier, the second retrieval processing unit 805 refers to only the minor classification map 400 of FIG. 4. In the minor classification map 400, the second retrieval processing unit 805 detects the file Fi to be used for which ON is indicated in the bit string of the classification code of the search word, as the specific file to be used.

For example, if the search word is "hashed-beef-and-rice", the classification code thereof is the minor classification code "#1033". Therefore, the second detecting unit 1201 detects the file F1 to be used for which ON is indicated in the bit string of the minor classification code "#1033" in the minor classification map 400, as the specific file to be used.

If the tier to be used ascends up to the second tier, the classification codes are specified including the classification codes up to the second tier. For the search word "hashed-beef-and-rice", the intermediate classification code thereof is the two digits at the head "#10" (rice). Therefore, the second detecting unit 1201 detects the files F1 and F2 for which ON is indicated in the bit string of the intermediate classification code "#10" in the intermediate classification map 300, as the specific files to be used. In this manner, moving the tier to be used to a higher tier enables the file F2, which is not detected in the third tier, to be included among the specific files to be used and therefore, the range of the specific files to be used can be expanded.

Similarly, if the tier to be used ascends up to the first tier, the classification codes are specified including the classification codes up to the first tier. For the search word "hashed-beef-and-rice", the major classification code thereof is the one digit at the head "#1" (food). Therefore, the second detecting unit 1201 detects the files F1 to F3 for which ON is indicated in the bit string of the major classification code "#1" in the major classification map 200, as the specific files to be used. In this manner, moving the tier to be used to a higher tier enables the file F3, which is not detected for the second tier, to be included among the specific files to be used and therefore, the range of the specific files to be used can be expanded.

For example, if the search words are "hashed-beef-and-rice" and "mild", the classification codes thereof are the minor classification codes "#1033" and "#4111". Therefore, the second detecting unit 1201 detects the file F1 to be used for which ON is indicated in each of the bit strings of the minor classification codes "#1033" and "#4111" in the minor classification map 400, as the specific file to be used.

If the tier to be used ascends up to the second tier, the classification codes are specified including the classification codes up to the second tier. For the search word "hashed-beef-and-rice" and "mild", the intermediate classification code thereof is the two digits at the head "#10" (rice) and "#41" (sweet). Therefore, the second detecting unit 1201 detects the files F1 and F2 for which ON is indicated in the bit string of the intermediate classification code "#10" and "#41" in the intermediate classification map 300, as the specific files to be used. In this manner, moving the tier to be used to a higher tier enables the file F2, which is not detected in the third tier, to be included among the specific files to be used and therefore, the range of the specific files to be used can be expanded.

Similarly, if the tier to be used ascends up to the first tier, the classification codes are specified including the classification codes up to the first tier. For the search word "hashed-beef-and-rice" and "mild", the major classification code thereof is the one digit at the head "#1" (food) and "#4" (taste). Therefore, the second detecting unit 1201 detects the files F1 and F3 for which ON is indicated in both the bit string of the major classification code "#1" and "#4" in the major classification map 200, as the specific files to be used. This is an example where despite an attempt to expand the range of the specific files to be used, the range of the specific files to be used is not expanded.

If the tiers of plural search words are different from each other, the following procedure is executed. For example, if the search words are "hashed-beef-and-rice" and "mild", the classification codes thereof are the minor classification code "#1033" and the intermediate classification code "#41". Therefore, the second detecting unit 1201 detects the file F1 for which ON is indicated in each of the bit strings of the minor classification code "#1033" and the intermediate classification code "#41" in the minor classification map 400, as the specific file to be used.

If the tier to be used ascends up to the second tier, the second detecting unit 1201 detects the files F1 and F2 to be used for each of which ON is indicated in the bit strings of the intermediate classification codes "#10" and "#41" in the intermediate classification map 300, as the specific files to be used.

In this manner, moving the tier to be used to a higher tier enables the file F2, which is not detected for the third tier, to be included among the specific files to be used and therefore, the range of the specific files to be used can be expanded. If the retrieving apparatus 800 is unable to access the classification map group M, the words in all the files F1 to Fn to be used are the comparison words.

The setting unit 1202 sets as the tier to be used, a designated tier that is designated from a tier group constituting the synonym dictionary data 100 that has the similar meaning relations among words hierarchically classified and coded therein. For example, the designated tier is set to be the lowest layer. The tier to be used is a variable and the initial value thereof is the designated tier. The tier to be used ascends from the designated tier by one tier at one time.

For example, when the counting result acquired by the second counting unit 1205 is equal to or smaller than the predetermined number, the setting unit 1202 changes the tier to be used to a higher tier. The predetermined number is a value set in advance. Although the criterion for the change is set to be equal to or smaller than the predetermined number, the determination may be made based on a percentage. For example, the denominator is set to be the total number of the character strings for comparison and the numerator is set to be the predetermined number and thereby, the predetermined probability is set.

If the value acquired by dividing the counting result by the total number of the character strings for comparison is equal to or smaller than the predetermined probability, the setting unit 1202 changes the tier to be used to a higher tier. The range of the change is one tier. For example, if the tier to be used is the third tier before the change, the tier to be used is the second tier after the change. When the tier to be used is changed, the second detecting unit 1201 detects the specific file having present therein, the classification code of the search word in the tier to be used after the change.

The second specifying unit 1203 specifies, from the synonym dictionary data 100 and for each character string for comparison, the classification codes of the search word in the search character string in the designated tier to the tier to be used, and the classification codes of the comparison word in the character string for comparison of the character string group to be compared with in the designated tier to the tier to be used. The first specifying unit 902 specifies the classification codes in the specific tier (for example, the intermediate tier) for the search word and the comparison word. However, the second specifying unit 1203 specifies the classification codes in the designated tier to the tier to be used. The second specifying unit 1203 specifies the classification codes in the designated tier to the tier to be used after the change each time the tier to be used is changed.

It is assumed that the search word is "curry-and-rice". For example, if the designated tier is the third tier, in the initial state, the tier to be used is also set to be the third tier. The second specifying unit 203 specifies the classification code "#1032" of the search word "curry-and-rice" in the third tier. When the tier to be used ascends to the second tier, the second specifying unit 1203 specifies the classification code "#10" (rice) of the search word "curry-and-rice" in the second tier. When the tier to be used is the first tier, the second specifying unit 1203 further specifies the classification code "#1" (food) of the search word "curry-and-rice" in the first tier.

It is assumed that the search word is "spicy". The classification code of the search word "spicy" is the intermediate classification code and is not a classification code in the designated tier (the third tier). In this case, the tier to be used is the third tier and therefore, the second specifying unit 1203 is unable to specify the classification code of the search word "spicy". Thereafter, when the tier to be used ascends to the second tier, the second specifying unit 1203 specifies the classification code "#42" of the search word "spicy" in the second tier. When the tier to be used further ascends to the first tier, the second specifying unit 1203 specifies the classification code "#4" of the search word "spicy" in the first tier.

The second calculating unit 1204 calculates, for each character string for comparison, the degree of similarity between the search character string and the character string for comparison based on the classification codes of the search word in the designated tier to the tier to be used and the classification codes of the comparison word in the designated tier to the tier to be used. For example, the second calculating unit 1204 produces a synonym vector of the search character string using the classification codes of the search word in the designated tier to the tier to be used.

Similarly, the second calculating unit 1204 produces a synonym vector of the character string for comparison using the classification codes of the comparison word in the designated tier to the tier to be used. Similar to the first calculating unit 907, the second calculating unit 1204 calculates the degree of similarity by acquiring the inner product of the synonym vector of the search character string and the synonym vector of the character string for comparison. A specific example of this will be described later.

The second counting unit 1205 counts the number of character strings for comparison whose degrees of similarity are each equal to or higher than a predetermined degree of similarity among the character string group to be compared and for which the degree of similarity is calculated by the second calculating unit 1204. The predetermined degree of similarity is a value set in advance. If the counting result acquired by the second counting unit 1205 is equal to or smaller than the predetermined number, the setting unit 1202 causes the tier to be used to ascend by one tier and, the processes executed by the second detecting unit 1201 and the second specifying unit 1203 are again executed.

When the process executed by the second retrieval processing unit 805 is executed, the output unit 806 outputs at least the character strings for comparison whose degrees of similarity are each equal to or higher than the predetermined degree of similarity, among the character string group to be compared and whose counting results acquired by the second counting unit 1205 are larger than the predetermined number.

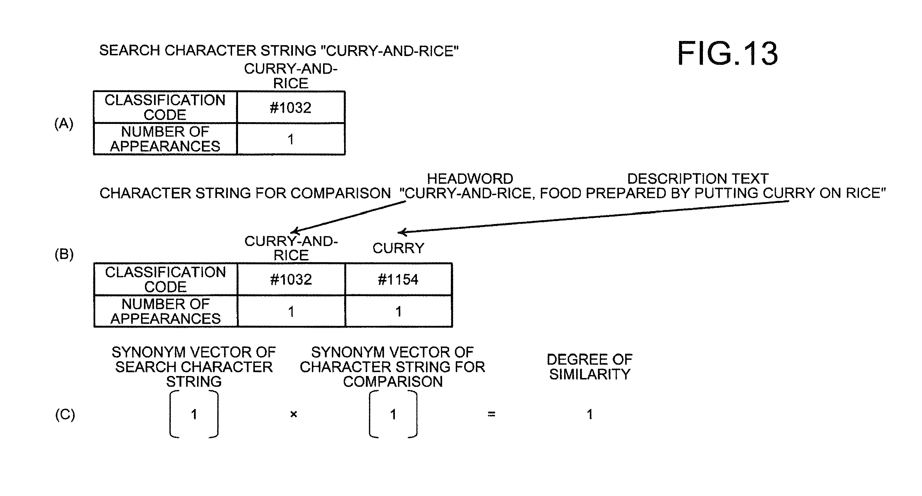

FIG. 13 is an explanatory diagram of a specific example 1 of the calculation of the degree of similarity calculated by the second calculating unit 1204. The specific example 1 is an example where one word is a search character string and is compared with the character string for comparison. In the specific example 1, it is assumed that the search word is "curry-and-rice" and the character string for comparison to be the comparison unit includes "curry-and-rice", which is the headword of the dictionary and "a food prepared by putting curry on rice" is the description text thereof. The designated tier is the third tier and the tier to be used is also the third tier.

In (A), the second specifying unit 1203 acquires the minor classification code "#1032" to be the tier to be used (the third tier) of the search word "curry-and-rice". The search word is only "curry-and-rice" and therefore, the number of appearances of the minor classification code "#1032" is one.

In (B), for the character string for comparison "curry-and-rice, a food prepared by putting curry on rice", "curry-and-rice", "curry", "rice", and "food" are extracted by the morphological analysis and the word extraction executed by the analyzing unit 802. For each of the extracted words, the second specifying unit 1203 acquires the classification code in the tier to be used (the third tier).

For this example, the words belonging to the third tier that is the tier to be used are "curry-and-rice" and "curry" of the extracted words "curry-and-rice", "curry", "rice", and "food", and therefore, the minor classification codes "#1032" and "#1154" are specified. The number of appearances of each of these words is one. Among these, the number of appearances of the classification code "#1154" (curry), which does not match the classification codes of the search words, is excluded.

In (C), the second calculating unit 1204 converts the number of appearances acquired in (A) into a vector. This vector will be referred to as "synonym vector of the search character string". Similarly, the second calculating unit 1204 converts the number of appearances acquired in (B) into a vector. This vector will be referred to as "synonym vector of the character string for comparison". The second calculating unit 1204 calculates the degree of similarity by acquiring the inner product of these synonym vectors. In (C), the degree of similarity is i.

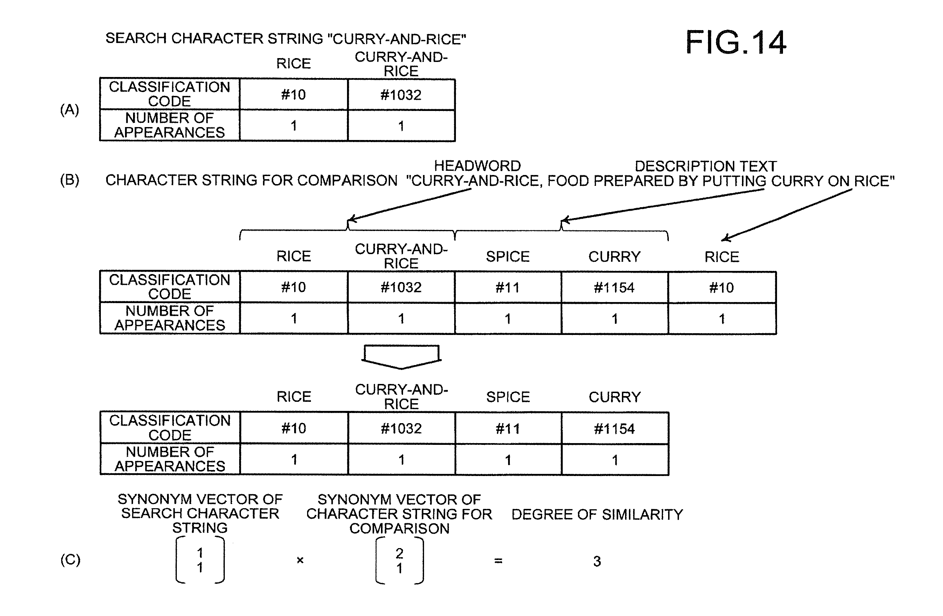

FIG. 14 is an explanatory diagram of a specific example 2 of the calculation of the degree of similarity executed by the second calculating unit 1204. The specific example 2 is an example where the tier to be used ascends to the second tier in the specific example 1 of FIG. 13.

In (A), the second specifying unit 1203 acquires the minor classification code "#1032" and the intermediate classification code "#10" as the classification codes of the search word "curry-and-rice" in the designated tier (the third tier) to the tier to be used (the second tier). The search word is only "curry-and-rice", the number of appearances of each of the minor classification code "#1032" and the intermediate classification code "#10" is one.

In (B), for the character string for comparison "curry-and-rice, a food prepared by putting curry on rice", "curry-and-rice", "curry", "rice", and "food" are extracted by the morphological analysis and the word extraction executed by the analyzing unit 802. For each of the extracted words, the second specifying unit 1203 acquires the classification codes in the designated tier (the third tier) to the tier to be used (the second tier).

In this example, the words belonging to the third tier to be the designated tier of the extracted words "curry-and-rice", "curry", "rice", and "food" are "curry-and-rice" and "curry" and therefore, the minor classification codes "#1032" and "#1154" are specified. The second specifying unit 1203 specifies the classification codes of the extracted words "curry-and-rice", "curry", "rice", and "food" in the second tier.

Although "curry-and-rice" itself has the minor classification code "#1032", the two digits at the head thereof "#10" (rice) is specified as the intermediate classification code thereof. Although "curry" has the minor classification code "#1154", the two digits at the head thereof ""#11" (spice) is specified as the intermediate classification code thereof. "Rice" corresponds to an intermediate classification code and therefore, "#10" is specified as it is.

Therefore, the number of appearances of the intermediate classification code "#10" (rice) is two and the number of appearances of the intermediate classification code "#11" (spice) is one. Among these, the intermediate classification code "#11" (spice) is not present in (A) and therefore is excluded. The number of appearances of the intermediate classification code "#11" (spice) specified in this session and the number of appearances of the minor classification code in the character string for comparison depicted in FIG. 13 are consolidated into each other.

In (C), the second calculating unit 1204 converts the number of appearances acquired in (A) into a vector and produces the synonym vector of the search character string. Similarly, the second calculating unit 1204 converts the number of appearances acquired in (B) into a vector and produces the synonym vector of the character string for comparison. The second calculating unit 1204 calculates the degree of similarity by acquiring the inner product of these synonym vectors. In (C), the degree of similarity is three.

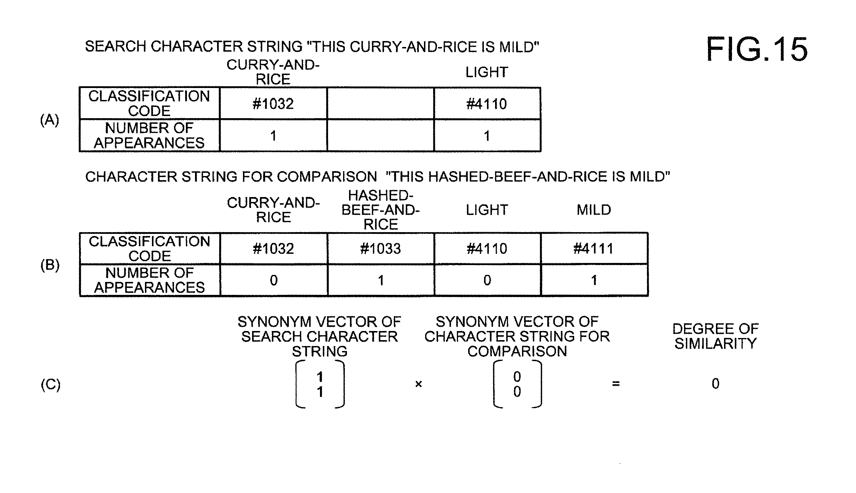

FIG. 15 is an explanatory diagram of a specific example 1 of the calculation of the degree of similarity executed by the second calculating unit 1204. The specific example 1 is an example where the search character string (including plural search words) and the character string for comparison are compared with each other. In the specific example 1, it is assumed that the search character string is "This curry-and-rice is mild" and the character string for comparison to be the comparison unit is "This hashed-beef-and-rice is mild". It is also assumed that the designated tier is the third tier and the tier to be used is also the third tier.

In (A), for the search character string "This curry-and-rice is mild", "curry-and-rice" and "mild" are extracted by the morphological analysis and the word extraction executed by the analyzing unit 802. The classification code in the tier to be used (the third tier) is acquired by the second specifying unit 1203 for each of the extracted words. In the specific example 1, the minor classification codes "#1032" and "#4110" of the extracted words "curry-and-rice" and "light" are specified. The number of appearances of each of these codes is one.

In (B), for the character string for comparison "This hashed-beef-and-rice is mild", "hashed-beef-and-rice" and "mild" are extracted by the morphological analysis and the word extraction executed by the analyzing unit 802. The classification code in the tier to be used (the third tier) is acquired by the second specifying unit 1203 for each of the extracted words. In the specific example 1, the minor classification codes "#1033" and "#4111" of the extracted words '"hashed-beef-and-rice" and "mild" are specified. The number of appearances of each of these codes is one. However, the number of appearances of each of the minor classification codes "#1033" and "#4111" is excluded because no match is established between these codes and the classification code of the search word.

In (C), the second calculating unit 1204 converts the number of appearances acquired in (A) into a vector and produces the synonym vector of the search character string. Similarly, the second calculating unit 1204 converts the number of appearances acquired in (B) into a vector and produces the synonym vector of the character string for comparison. The second calculating unit 1204 calculates the degree of similarity by acquiring the inner product of these synonym vectors. In (C), the degree of similarity is zero.

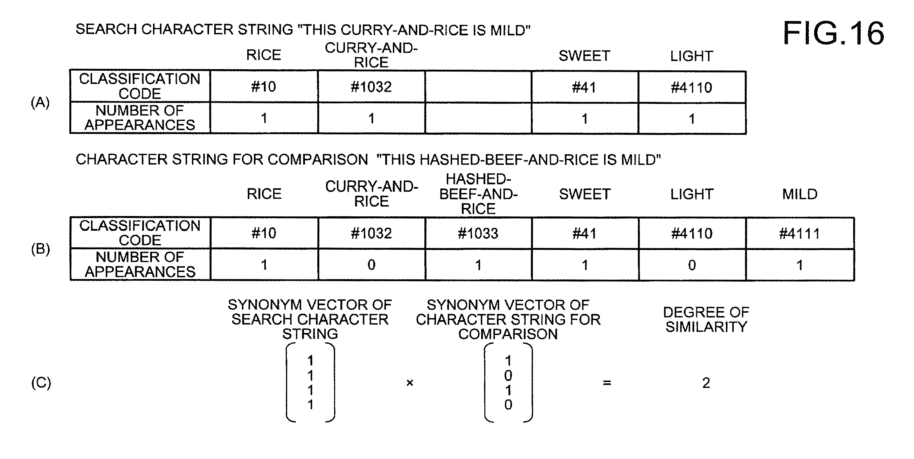

FIG. 16 is an explanatory diagram of a specific example 2 of the calculation of the degree of similarity executed by the second calculating unit 1204. The specific example 2 is an example where the tier to be used is changed from the third tier to the second tier in the specific example 1 of FIG. 15.

In (A), for the extracted words "curry-and-rice" and "mild" of the search character string "This curry-and-rice is mild", the second specifying unit 1203 acquires the classification codes in the second tier in addition to the classification codes in the third tier. In the specific example 2, in addition to the minor classification codes "#1032" and "#4110" of the extracted words "curry-and-rice" and "light" specified in the specific example 1, the intermediate classification codes "#10" (rice) and "#41" (sweet) are specified from the two digits from the head of each of the minor classification codes. The number of appearances of each of these codes is one.

In (B), for the extracted words "hashed-beef-and-rice" and "mild" of the character string to be compared "This hashed-beef-and-rice is mild", the second specifying unit 1203 acquires the classification codes in the second tier in addition to the classification codes in the third tier. In the specific example 2, in addition to the minor classification codes "#1033" and "#4111" of the extracted words "hashed-beef-and-rice" and "mild", the intermediate classification codes "#10" (rice) and "#41" (sweet) are specified from the two digits from the head of each of the minor classification codes. The number of appearances of each of these codes is one. Similarly to the specific example 1 of FIG. 15, the number of appearance of each of the minor classification codes "#1033" and "#4111" are excluded because no match is established between these codes and the classification code of the search word.

In (C), the second calculating unit 1204 converts the number of appearances acquired in (A) into a vector and produces the synonym vector of the search character string. Similarly, the second calculating unit 1204 converts the number of appearances acquired in (B) into a vector and produces the synonym vector of the character string for comparison. The second calculating unit 1204 calculates the degree of similarity by acquiring the inner product of these synonym vectors. In (C), the degree of similarity is two.

In this manner, the degree of similarity calculated using the classification codes in the third tier to the second tier may be higher than the degree of similarity calculated using the classification codes only in the third tier described in the specific example 1 of FIG. 15. As above, expansion of the tier to a higher tier causes the number of the degrees of similarity that are equal to or higher than the predetermined degree of similarity, to increase. Therefore, the number of hits in the fuzzy retrieval whose degrees of similarity are high can be increased stepwise.

### <Procedure for Retrieval Process>

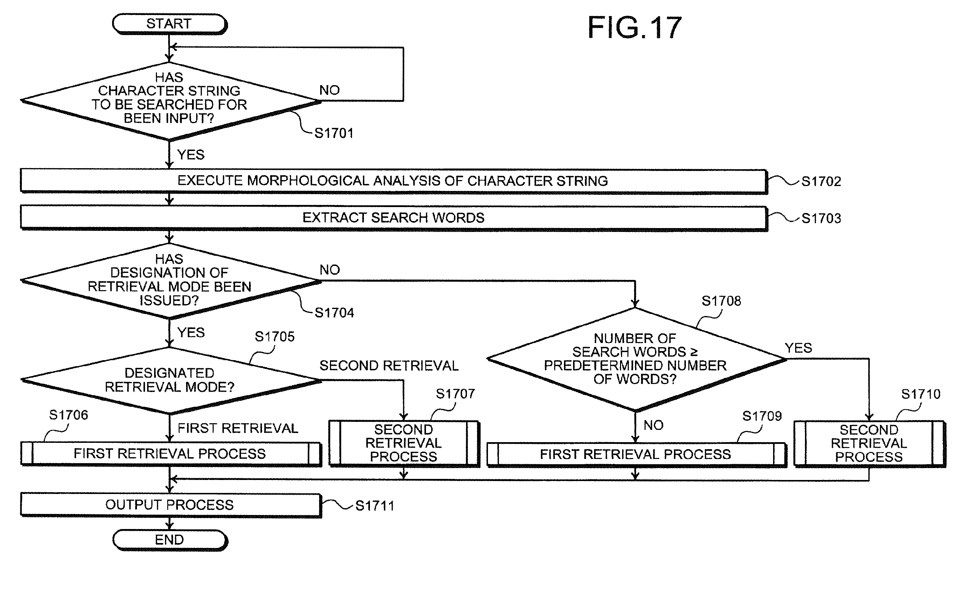

A procedure for a retrieval process execute by the retrieving apparatus 800 will be described with reference to FIGs. 17 to 25.

FIG. 17 is a flowchart of the procedure for the retrieving process executed by the retrieving apparatus 800. The retrieving apparatus 800 waits for a character string that is to be searched for, to be input by the input unit 801 (step S1701: NO). When the search character string is input (step S1701: YES), the retrieving apparatus 800 executes morphological analysis of the character string and separates the character string into words using the analyzing unit 802 (step S1702). The retrieving apparatus 800 extracts the search word that corresponds to the word class necessary for the fuzzy retrieval, from the group of the words (step S1703).

The retrieving apparatus 800 determines whether designation of the retrieval mode is issued, using the input unit 801 (step S1704). If the retrieving apparatus 800 determines that a designation of the retrieval mode has been issued (step S1704: YES), the retrieving apparatus 800 determines whether the designated retrieval mode is the first retrieval mode or the second retrieval mode (step S1705).

If the retrieving apparatus 800 determines that the designated retrieval mode is the first retrieval mode (step S1705: FIRST RETRIEVAL), the retrieving apparatus 800 executes a first retrieval process using the first retrieval processing unit 804 (step S1706). On the other hand, if the retrieving apparatus 800 determines that the designated retrieval mode is the second retrieval mode (step S1705: SECOND RETRIEVAL), the retrieving apparatus 800 executes a second retrieval process using the second retrieval processing unit 805 (step S1707).

If the retrieving apparatus 800 determines at step S1704 that no retrieval mode is designated (step S1704: NO), the retrieving apparatus 800 determines if the number of search words is equal to or larger than the predetermined number of words, using the recognizing unit 803 (step S1708). If the retrieving apparatus 800 determines that the number of search words is not equal to or larger than the predetermined number of words (step S1708: NO), the retrieving apparatus 800 executes the first retrieval process using the first retrieval processing unit 804 (step S1709). On the other hand, if the retrieving apparatus 800 determines that the number of search words is equal to or larger than the predetermined number of words (step S1708: YES), the retrieving apparatus 800 executes the second retrieval process using the second retrieval processing unit 805 (step S1710).

When the first retrieval process (steps S1706 and S1709) or the second retrieval process (steps S1707 and S1710) comes to an end, the retrieving apparatus 800 executes an output process using the output unit 806 (step S1711). Thereby, the retrieval process comes to an end.

As described, if the retrieving apparatus 800 receives the designation of the retrieval mode, the retrieving apparatus 800 executes the retrieval process according to the designation. On the other hand, if the retrieving apparatus 800 receives no designation of the retrieval mode, the retrieving apparatus 800 determines which one of the first retrieval process and the second retrieval process is to be executed, based on the magnitude of the number of the search words. If the number of search words is large (is equal to or larger than the predetermined number of words), the retrieving apparatus 800 executes the second retrieval process and thereby, can narrow down the range of the tiers for the retrieval, and can increase stepwise the number of hits in the fuzzy retrieval. On the other hand, if the number of search words is small (is smaller than the predetermined number of words), it is considered that the number of hits in the fuzzy retrieval is not large and therefore, the range from the tier of the search words to the highest tier can be set to be the range for the retrieval and the proper number of hits can be acquired in the fuzzy retrieval.

### <Procedure for First Retrieval Process>

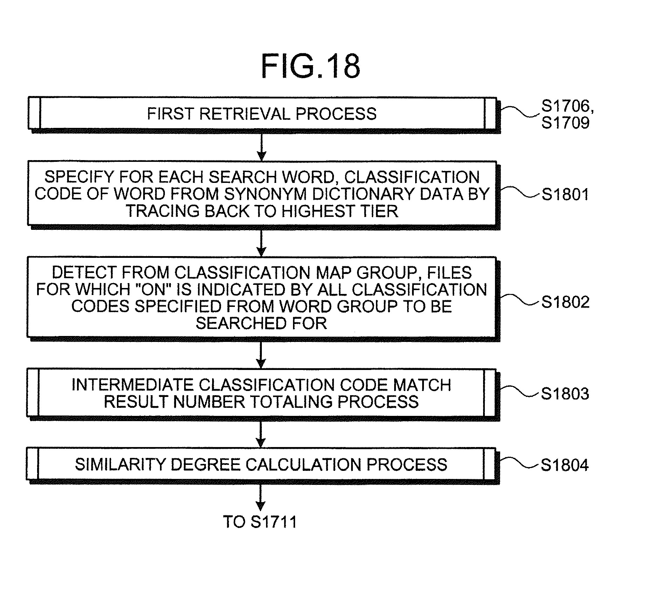

FIG. 18 is a flowchart of an example of detailed process procedure for the first retrieval process (steps S1706 and S1709) depicted in FIG. 17. The retrieving apparatus 800 specifies the classification codes of the search words from the synonym dictionary data 100 tracing back to the highest tier for each of the search words using the first specifying unit 902 (step S1801).

The retrieving apparatus 800 detects from the classification map group M, the files to be used of the file numbers for which ON is indicated in the bit string of the classification codes for each tier specified from each of the search words of the search word group (step S1802). The retrieving apparatus 800 executes an intermediate classification code match result number totaling process (step S1803) and a similarity degree calculation process (step S1804). Thereby, the first retrieval process comes to an end.

### <Procedure for Intermediate Classification Code Match Result Number Totaling Process>

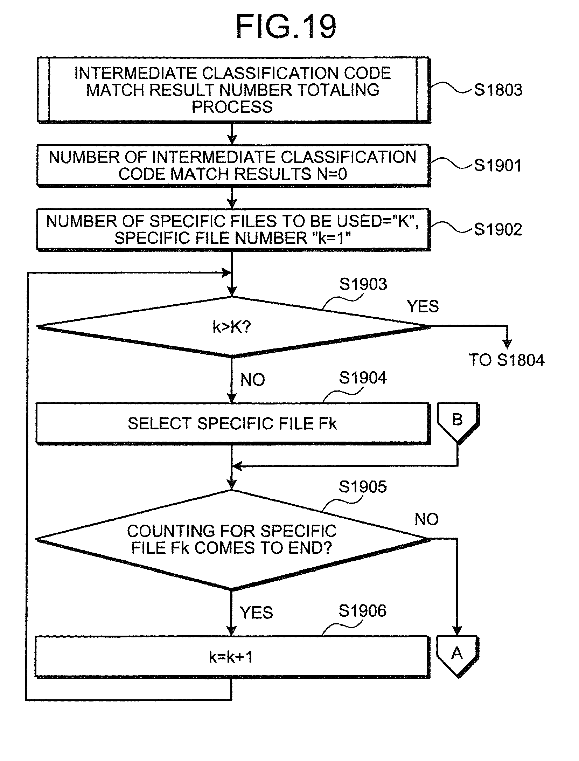

FIG. 19 is a flowchart (Part I) of an example of detailed process procedure for the intermediate classification code match result number totaling process (step S1803) depicted in FIG. 18. The retrieving apparatus 800 sets the number of the intermediate classification code match results N to be N=0 (step S1901). The retrieving apparatus 800 sets the number of specific files to be used to be "K" and also sets the specific file-to-be-used number k to be "k=1" (step S1902). The number K of specific files to be used is the number of files to be used that is detected at step S1802 of FIG. 18.

The retrieving apparatus 800 determines whether k is k>K (step S1903). If the retrieving apparatus 800 determines that k is not k>K (step S1903: NO), the retrieving apparatus 800 selects the specific file Fk to be used (step S1904). The retrieving apparatus 800 determines whether the counting for the specific file Fk to be used comes to an end (step S1905). For example, the counting comes to an end when no unselected character string for comparison is present.

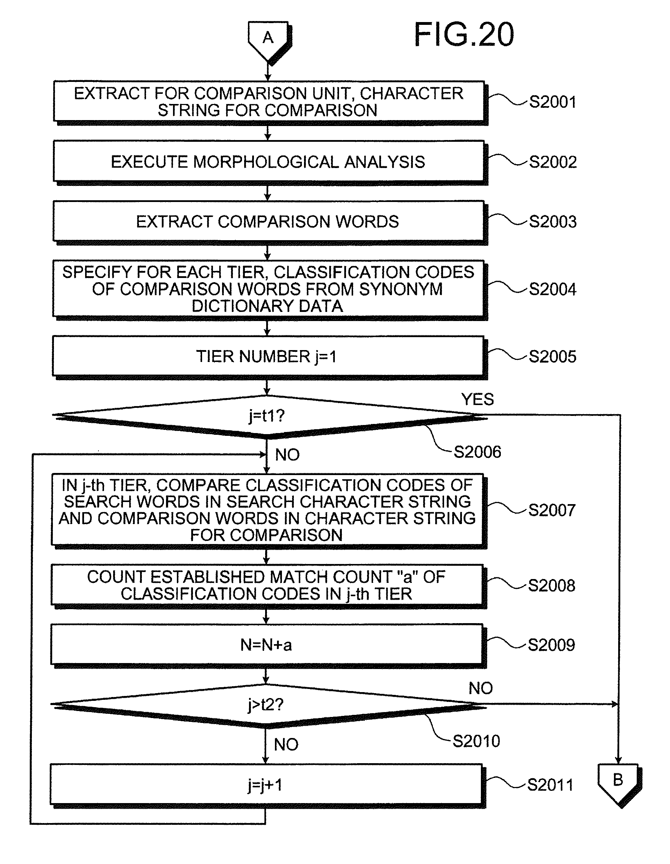

If the retrieving apparatus 800 determines that the counting comes to an end (step S1905: YES), the retrieving apparatus 800 increments the specific file-to-be-used number k (step S1906) and the procedure returns to step S1903. On the other hand, if the retrieving apparatus 800 determines that the counting does not yet come to an end (step S1905: NO), the procedure progresses to step S2001 of FIG. 20. If the retrieving apparatus 800 determines at step S1903 that k is k>K (step S1903: YES), the retrieving apparatus 800 progresses to the similarity degree calculation process (step S1804).

FIG. 20 is a flowchart (Part II) of the detailed process procedure for the intermediate classification code match result number totaling process (step S1803) depicted in FIG. 18. When the retrieving apparatus 800 determines at step S1905 that the counting does not yet come to an end (step S1905: NO), the retrieving apparatus 800 extracts the character string for comparison from the specific file Fk to be used for each comparison unit (step S2001). The retrieving apparatus 800 executes the morphological analysis for the search character string and disintegrates the character string into words using the analyzing unit 802 (step S2002). The retrieving apparatus 800 extracts the comparison words that correspond to the word classes necessary for the fuzzy retrieval, from the group of disintegrated words (step S2003).

The retrieving apparatus 800 specifies the classification codes of the comparison words, in the synonym dictionary data 100 and for each tier using the first specifying unit 902 (step S2004). The retrieving apparatus 800 sets the tier number j to be j=1 (step S2005) and determines whether j is j=t1 (step S2006). It is assumed that the range of the intermediate tiers is a range from a t1-th tier to a t2-th tier (t1<t2, t1≠1, t2≠m, and "m" is the tier number of the lowest layer).

If the retrieving apparatus 800 determines that j is not j=t1 (step S2006: NO), the procedure progresses to step S1905 of FIG. 19. On the other hand, if the retrieving apparatus 800 determines that j is j=t1 (step S2006: YES), the retrieving apparatus 800 compares in the j-th tier, the classification codes of the search words in the search character string and the comparison words in the character string for comparison, using the judging unit 904 (step S2007).

The retrieving apparatus 800 counts the established match count "a" of the classification codes in the j-th tier using the first counting unit 905 (step S2008) and adds the established match count a to the intermediate classification code match result number N (whose initial value N is N=0) (step S2009). The retrieving apparatus 800 determines whether j is j>t2 (step S2010). If the retrieving apparatus 800 determines that j is not j>t2 (step S2010: NO), the retrieving apparatus 800 increments the tier number j (step S2011) and the procedure returns to step S2007.

On the other hand, when the retrieving apparatus 800 determines that j is j>t2 (step S2010: YES), the procedure progresses to step S1905 of FIG. 19. The intermediate classification code match result number totaling process (step S1803) causes the established match count of the classification codes to be counted in the intermediate tiers (the t1-th tier to the t2-th tier).

### <Procedure for Similarity Degree Calculation Process>

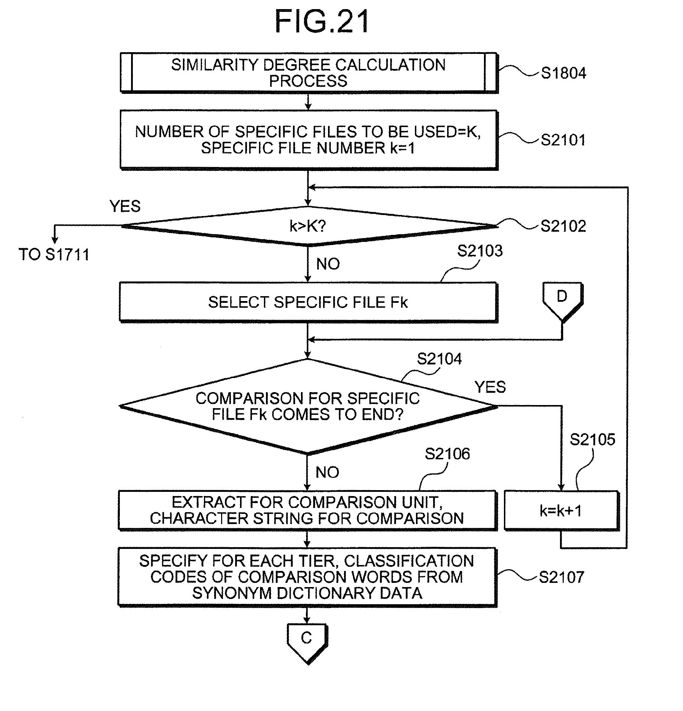

FIG. 21 is a flowchart (Part I) of an example of a detailed process procedure of the similarity degree calculation process (step S1804) depicted in FIG. 18. The retrieving apparatus 800 sets the number of specific files to be used, to be K and also sets the specific file-to-be-used number k to be k=1 (step S2101). The number K of specific files to be used is the number of files to be used detected at step S1802 of FIG. 18.

The retrieving apparatus 800 determines whether k is k>K (step S2102). If the retrieving apparatus 800 determines that k is k>K (step S2102: YES), the retrieving apparatus 800 progresses to the output process (step S1711). On the other hand, if the retrieving apparatus 800 determines that k is not k>K (step S2102: NO), the retrieving apparatus 800 selects the specific file Fk to be used (step S2103). The retrieving apparatus 800 determines whether the comparison for the specific file Fk to be used comes to an end (step S2104). For example, the comparison comes to an end when no unselected character string for comparison is present.

If the retrieving apparatus 800 determines that the comparison for the specific file Fk to be used comes to an end (step S2104: YES), no character string for comparison to be extracted is present and therefore, the retrieving apparatus 800 increments the specific file-to-be-used number k (step S2105) and returns to the operation at step S2102.

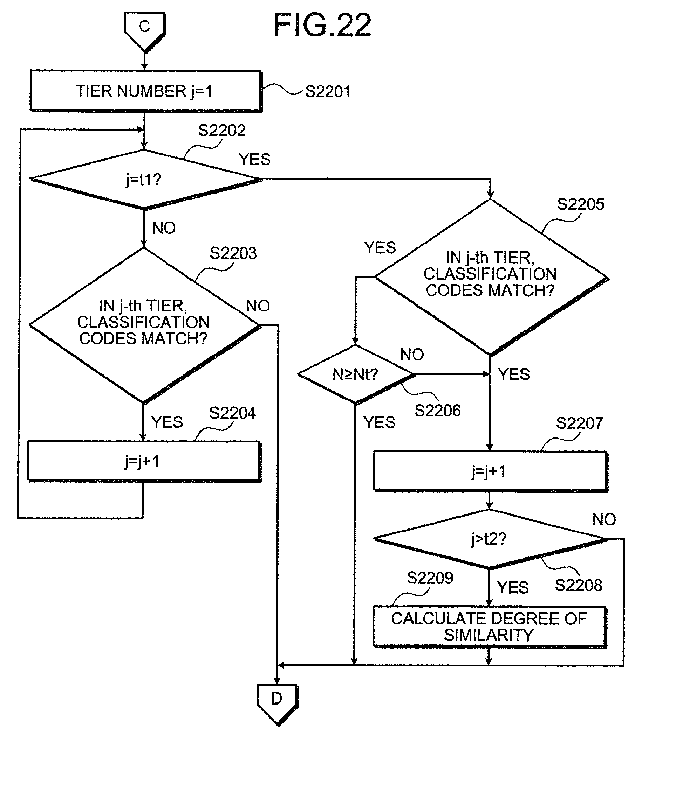

On the other hand, if the retrieving apparatus 800 determines that the comparison for the specific file Fk to be used does not yet come to an end (step S2104: NO), the retrieving apparatus 800 extracts the character string for comparison from the specific file Fk to be used, for the comparison unit (step S2106). The retrieving apparatus 800 specifies for each tier, the classification codes of the comparison words from the synonym dictionary data 100, using the first specifying unit 902 (step S2107) and progresses to the operation at step S2201 of FIG. 22.

FIG. 22 is a flowchart (Part II) of the detailed process procedure of the similarity degree calculation process (step S1804) depicted in FIG. 18. After executing the operation at step S2107, the retrieving apparatus 800 sets the tier number j to be j=1 (step S2201) and determines whether j is j=t1 (step S2202). If the retrieving apparatus 800 determines that j is not j=t1 (step S2202: NO), that is, if the tier is a higher tier, the retrieving apparatus 800 judges whether in the j-th tier, the classification codes match between the search words of the search character string and the comparison words of the character string for comparison using the judging unit 904 (step S2203). If the retrieving apparatus 800 judges that the classification codes match therebetween (step S2203: YES), the retrieving apparatus 800 increments the tier number j (step S2204) and returns to the operation at step S2202.

On the other hand, if the retrieving apparatus 800 judges that the classification codes do not match therebetween (step S2203: NO), the retrieving apparatus 800 returns to the operation at step S2104 of FIG. 21. If the retrieving apparatus 800 determines at step S2202 that j is j=t1 (step S2202: YES), the retrieving apparatus 800 judges whether in the j-th tier, the classification codes match between the search words of the search character string and the comparison words of the character string for comparison using the judging unit 904 (step S2205).

If the retrieving apparatus 800 judges that the classification codes in the j-th tier do not match therebetween (step S2205: NO), the retrieving apparatus 800 determines if the intermediate classification code match result number N is equal to or larger than the threshold value Nt (step S2206). If the retrieving apparatus 800 determines that N is N≥Nt (step S2206: YES), the character string for comparison having non-matching words to be compared does not need to be used for the fuzzy retrieval and therefore, is excluded from the character strings for the calculation of the degree of similarity. The retrieving apparatus 800 returns to the operation at step S2104. On the other hand, if the retrieving apparatus 800 determines that N is not N≥Nt (step S2206: NO), the character strings for the fuzzy retrieval are insufficient and therefore, the retrieving apparatus 800 progresses to the operation at step S2207.

If the retrieving apparatus 800 judges at step S2205 that the classification codes in the j-th tier match therebetween (step S2205: YES), the retrieving apparatus 800 progresses to the operation at step S2207. The retrieving apparatus 800 increments the tier number j at step S2207 (step S2207) and determines whether j is j>t2 (step S2208). If the retrieving apparatus 800 determines that j is not j>t2 (step S2208: NO), the tier still is an intermediate tier and the retrieving apparatus 800 returns to the operation at step S2205.

On the other hand, if the retrieving apparatus 800 determines that j is j>t2 (step S2208: YES), the retrieving apparatus 800 produces the synonym vector of the search character string and the synonym vector of the character string for comparison and calculates the degree of similarity between the search character string and the character string for comparison using the kernel method, using the first calculating unit 907 (step S2209). The retrieving apparatus 800 returns to the operation at step S2104 of FIG. 21.

In this manner, in the intermediate tiers (the t1-th tier to the t2-th tier), the retrieving apparatus 800 can select or refuse the character strings for comparison according to the situation such as selecting or refusing the character strings for comparison for the fuzzy retrieval corresponding to the magnitude of the number N of intermediate classification code match results. Therefore, the fuzzy retrieval can be executed for a proper number of character strings that are for comparison and whose degrees of similarity are high.

### <Procedure for Second Retrieval Process>

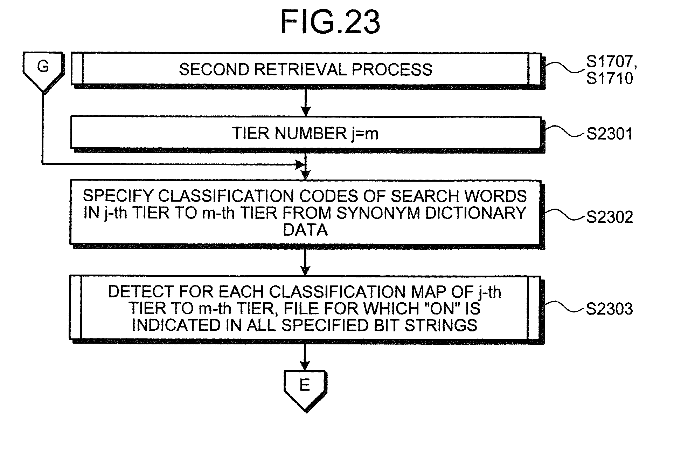

FIG. 23 is a flowchart (Part I) of an example of a detailed process procedure for the second retrieval process (steps S1707 and S1710) depicted in FIG. 17. In FIG. 23, the retrieving apparatus 800 sets the tier number j to be j=m (step S2301). "m" is the tier number of the designated tier and, for example, is set to be the lowest tier number.

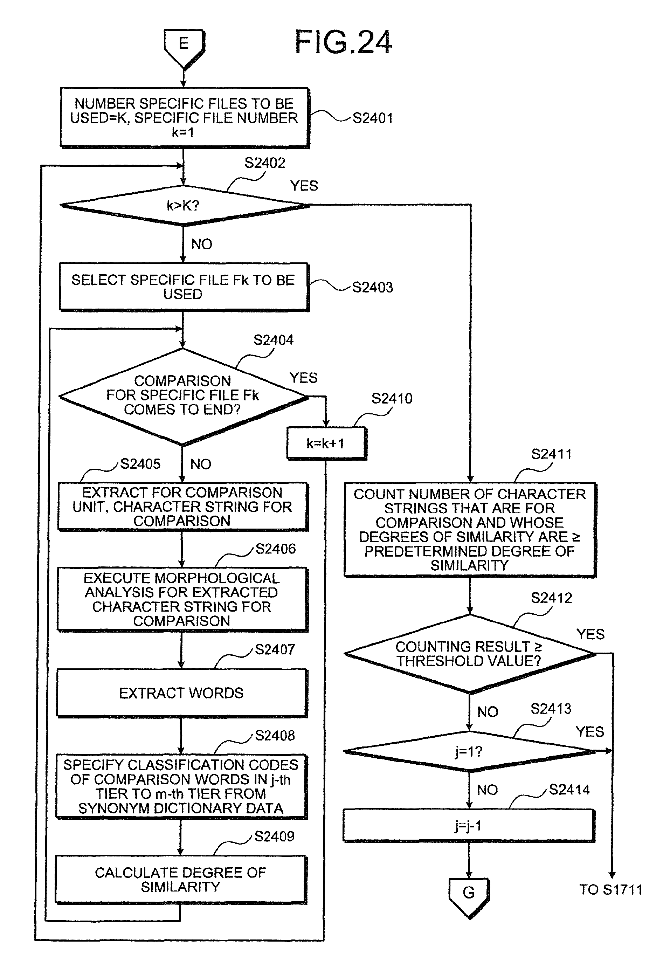

The retrieving apparatus 800 specifies the classification codes of the search words in the j-th tier to the m-th tier from the synonym dictionary data 100, using the second specifying unit 1203 (step S2302). The retrieving apparatus 800 refers to the classification maps for the j-th tier to the m-th tier and specifies the bit strings of the classification codes of the search words in the j-th tier to the m-th tier. The retrieving apparatus 800 detects the file to be used and for which ON is indicated in all the specified bit strings, using the second detecting unit 1201 (step S2303). Thereby, the file for the retrieval is narrowed down to the specific file to be used. The retrieving apparatus 800 progresses to the operation at step S2401 of FIG. 24.

FIG. 24 is a flowchart (Part II) of the detailed process procedure for the second retrieval process (steps S1707 and S1710) depicted in FIG. 18. After executing the operation at step S2303, the retrieving apparatus 800 sets the number K of specific files to be used to be K and also sets the specific file-to-be-used number k to be k=1 (step S2401). The number K of specific files to be used is the number of files to be used detected at step S2303 of FIG. 23.

The retrieving apparatus 800 determines whether k is k>K (step S2402). If the retrieving apparatus 800 determines that k is not k>K (step S2402: NO), the retrieving apparatus 800 selects the specific file Fk to be used (step S2403). The retrieving apparatus 800 determines whether the comparison for the specific file Fk to be used comes to an end (step S2404). For example, the comparison comes to an end if no unselected character string for comparison is present.

If the retrieving apparatus 800 determines that the comparison for the specific file Fk does not come to an end (step S2404: NO), the retrieving apparatus 800 extracts the character string for comparison, from the specific file Fk to be used for the comparison unit (step S2405). The retrieving apparatus 800 executes the morphological analysis for the extracted character string for comparison and separates the character string for comparison into words, using the analyzing unit 802 (step S2406).

The retrieving apparatus 800 extracts the comparison words that correspond to the word classes necessary for the fuzzy retrieval, from the group of disintegrated words (step S2407). The retrieving apparatus 800 specifies the classification codes of the comparison words in the j-th tier to the m-th tier from the synonym dictionary data 100, using the second specifying unit 1203 (step S2408).

The retrieving apparatus 800 produces a synonym vector of the search character string, using the classification codes of the search words in the search character string in the j-th tier to the m-th tier, via the second calculating unit 1204. Similarly, the retrieving apparatus 800 produces a synonym vector of the character string for comparison using the classification codes of the comparison words in the character string for comparison in the j-th tier to the m-th tier, using the second calculating unit 1204. The retrieving apparatus 800 calculates the degree of similarity between the search character string and the character string for comparison from these synonym vectors, using the second calculating unit 1204 (step S2409) and returns to the operation at step S2404.

On the other hand, if the retrieving apparatus 800 determines at step S2404 that the comparison for the specific file to be used Fk comes to an end (step S2404: YES), no character string for comparison and to be extracted is present and therefore, the retrieving apparatus 800 increments the specific file-to-be-used number k (step S2410) and returns to the operation at step S 2402.

If the retrieving apparatus 800 determines at step S2402 that k is k>K (step S2402: YES), the retrieving apparatus 800 counts the number of character strings that are for comparison and whose degrees of similarity calculated at step S2409 are each equal to or higher than the predetermined degree of similarity, using the second counting unit 1205 (step S2411). The retrieving apparatus 800 determines if the counting result is equal to or larger than the threshold value (step S2412). If the retrieving apparatus 800 determines that the counting result is not equal to or larger than the threshold value (step S2412: NO), the retrieving apparatus 800 determines whether the tier number j is j=1 (step S2413). If the retrieving apparatus 800 determines that the tier number j is not j=1 (step S2413: NO), the retrieving apparatus 800 decrements the tier number j (step S2414) and returns to the operation at step S2302.

On the other hand, if the retrieving apparatus 800 determines at step S2412 that the counting result is equal to or larger than the threshold value (step S2412: YES) or if the retrieving apparatus 800 determines at step S2413 that the tier number j is j=1 (step S2413: YES), the retrieving apparatus 800 causes the second retrieval process to come to an end.

In this manner, in the embodiment, for the character string that is for comparison and that is determined not to match the search character string based on the classification codes in the intermediate tiers, the character string for comparison can be selected or refused according to the situation such as selection or refusal of the character string for the fuzzy retrieval. Therefore, the fuzzy retrieval can be executed for a proper number of character strings for comparison whose degrees of similarity are high.

The execution of the narrowing down of the file group F to be used using the classification map group M enables execution of the fuzzy retrieval aiming at the file to be used that includes the character strings whose degrees of similarity are high. Therefore, execution of wasteful fuzzy retrieval can be prevented in advance and the speed of the fuzzy retrieval can be improved.

Any one among the first retrieval process and the second retrieval process can be selected based on the magnitude of the number of the search words constituting the search character string. If the number of search words is small, the first retrieval process is selected and the synonym vector of the search character string becomes large while the calculation of the degree of similarity can be completed in one session. Therefore, an increase of the speed of the fuzzy retrieval can be facilitated.

On the other hand, if the number of search words is large, the second retrieval process is selected and the range for the retrieval can be expanded stepwise from the lower tier and therefore, a small synonym vector only has to be necessary in the initial stage and improvement of the retrieval efficiency can be facilitated.

As described, according to the retrieval program, the retrieving apparatus, and the retrieval method, an effect is achieved that the accuracy of fuzzy retrieval can be improved by automatically selecting or refusing the range for the fuzzy retrieval.

The retrieval method described in the present embodiment may be implemented by executing a prepared program on a computer such as a personal computer and a workstation. The program is stored on a computer-readable recording medium such as a hard disk, a flexible disk, a CD-ROM, an MO, and a DVD, read out from the computer-readable medium, and executed by the computer. The program may be distributed through a network such as the Internet.

### EXPLANATIONS OF LETTERS OR NUMERALS

- 100: synonym dictionary data
- 200: major classification map
- 300: intermediate classification map
- 400: minor classification map
- 800: retrieving apparatus
- 801: input unit
- 802: analyzing unit
- 803: recognizing unit
- 804: first retrieval processing unit
- 805: second retrieval processing unit
- 806: output unit
- 901: first detecting unit
- 902: first specifying unit
- 903: extracting unit 903
- 904: judging unit 904
- 905: first counting unit
- 906: determining unit
- 907: first calculating unit
- 1201: second detecting unit
- 1202: setting unit 1202
- 1203: second specifying unit
- 1204: second calculating unit
- 1205: second counting unit 1205

## Claims

1. A retrieval program causing a computer to execute:
specifying in synonym dictionary data in which similar meaning relations among words are hierarchically classified and coded therein, and specifying in each tier, classification codes of a search word that is in a search character string and classification codes of a comparison word in character strings that are for comparison and are in a character string group for comparison;
extracting from among the specified classification codes of the search word and the specified classification codes of the comparison word, the classification codes in a specific tier of a tier group constituting the synonym dictionary data;
judging for each character string for comparison, whether the extracted classification code of the search word and the extracted classification code of the comparison word match;
counting for the specific tier, a match count of matching classification codes;
determining based on the match count, whether a character string for comparison is to be excluded whose classification code of the comparison word for the specific tier is judged not to match the classification code of the search word for the specific tier;
calculating based on the specified classification codes of the search word and the specified classification codes of the comparison word in a character string that is for comparison and is not to be excluded, a degree of similarity between the search character string and the character string that is for comparison and is not to be excluded; and
outputting a calculation result.

2. The retrieval program according to claim 1, wherein
the specific tier is an intermediate tier in the tier group.

3. The retrieval program according to claim 2, wherein
the extracting includes extracting from among the specified classification codes of the search word and the specified classification codes of the comparison word, classification codes in a higher tier that is higher than the intermediate tier, and
the judging includes judging for each character string for comparison, whether the classification code of the higher tier and extracted for the search word and the classification code of the higher tier and extracted for the comparison word match, and for each character string for comparison judged to match, further judging whether in the intermediate tier, the classification code of the search word and the classification code of the comparison word match.

4. The retrieval program according to any one of claims 1 to 3, further causing the computer to execute
recognizing whether search words are of a number equal to or larger than a predetermined number of words, wherein
the specifying includes specifying in the synonym dictionary data and specifying in each tier, the classification codes of the search word that is in the search character string and the classification codes of the comparison word in the character strings that are for comparison and are in the character string group for comparison, when the search words are not of a number equal to or larger than the predetermined number of words.

5. The retrieval program according to any one of claims 1 to 3, further causing the computer to execute
referring to a classification map of a highest tier in a classification map group having for each tier, sets of bit strings clarified therein and respectively indicating for each file to be used, presence or absence of a word corresponding to each classification code in the synonym dictionary data, and detecting a specific file to be used having classification codes of the search word in the highest tier present therein, wherein
the specifying includes specifying in each tier in the synonym dictionary data and for each character string for comparison, the classification codes of the search word that is in the search character string and the classification code of the comparison word that is in character strings of the character string group that is for comparison.

6. A retrieval program causing a computer to execute:
setting, as a tier to be used, a designated tier designated from a tier group constituting synonym dictionary data having similar meaning relations among words hierarchically classified and coded therein;
specifying in the synonym dictionary data, specifying for each character string for comparison and specifying in the designated tier to the tier to be used, classification codes of a search word in a search character string and classification codes of a comparison word in character strings that are for comparison and are in a character string group for comparison;
calculating for each character string for comparison and based on the specified classification codes of the search word and the specified classification codes of the comparison words, a degree of similarity between the search character string and the character string for comparison;
counting character strings that are for comparison, are in a character string group that is for comparison and for which the degrees of similarity are calculated, and whose degrees of similarity are equal to or higher than a predetermined degree of similarity;
changing the tier to be used to a tier that is higher than the tier to be used when a result of the counting is less than or equal a predetermined number; and
outputting at least the character strings whose degrees of similarity are each equal to or higher than the predetermined degree of similarity, among a character string group for which the result of the counting is larger than the predetermined number.

7. The retrieval program according to claim 6, further causing the computer to execute
recognizing whether a character count of the search word is equal to or larger than predetermined number of characters, wherein
the setting includes setting the designated tier to be the tier to be used, when the character count of the search word is equal to or lager than the predetermined number of characters.

8. The retrieval program according to claim 6 or 7, further causing the computer to execute
referring to a classification map group having for each tier, sets of bit strings clarified therein and respectively indicating for each file to be used, presence or absence of a word corresponding to each classification code in the synonym dictionary data, and detecting a specific file to be used having classification codes present therein of the search word in the tier to be used, wherein
the specifying includes specifying the classification codes of the search word and of the comparison word present in the detected specific file to be used.

9. A retrieving apparatus comprising:
an specifying unit that specifies in synonym dictionary data in which similar meaning relations among words are hierarchically classified and coded therein, and specifies in each tier, classification codes of a search word that is in a search character string and classification codes of a comparison word in character strings that are for comparison and are in a character string group for comparison;
an extracting unit that extracts from among the specified classification codes of the search word and the specified classification codes of the comparison word, the classification codes in a specific tier of a tier group constituting the synonym dictionary data;
a judging unit that for each character string for comparison, judges whether the extracted classification code of the search word and the extracted classification code of the comparison word match;
a counting unit that for the specific tier, counts a match count of matching classification codes;
a determining unit that based on the match count, determines whether a character string for comparison is to be excluded whose classification code of the comparison word for the specific tier is judged not to match the classification code of the search word for the specific tier;
a calculating unit that based on the specified classification codes of the search word and the specified classification codes of the comparison word in a character string that is for comparison and is not to be excluded, calculates a degree of similarity between the search character string and the character string that is for comparison and is not to be excluded; and
an output unit that output a calculation result.

10. A retrieving apparatus comprising:
a first setting unit that sets as a tier to be used, a designated tier designated from a tier group constituting synonym dictionary data having similar meaning relations among words hierarchically classified and coded therein;
an specifying unit that specifies in the synonym dictionary data, specifies for each character string for comparison and specifies in the designated tier to the tier to be used, classification codes of a search word in a search character string and classification codes of a comparison word in character strings that are for comparison and are in a character string group for comparison;
a calculating unit that for each character string for comparison and based on the specified classification codes of the search word and the specified classification codes of the comparison words, calculates a degree of similarity between the search character string and the character string for comparison;
a counting unit that counts character strings that are for comparison, are in a character string group that is for comparison and for which the degrees of similarity are calculated, and whose degrees of similarity are equal to or higher than a predetermined degree of similarity;
a second setting unit that changes the tier to be used to a tier that is higher than the tier to be used when a result of the counting is less than or equal a predetermined number; and
an output unit that outputs at least the character strings whose degrees of similarity are each equal to or higher than the predetermined degree of similarity, among a character string group for which the result of the counting is larger than the predetermined number.

11. A retrieval method executed by a computer, the retrieval method comprising:
specifying in synonym dictionary data in which similar meaning relations among words are hierarchically classified and coded therein, and specifying in each tier, classification codes of a search word that is in a search character string and classification codes of a comparison word in character strings that are for comparison and are in a character string group for comparison;
extracting from among the specified classification codes of the search word and the specified classification codes of the comparison word, the classification codes in a specific tier of a tier group constituting the synonym dictionary data;
judging for each character string for comparison, whether the extracted classification code of the search word and the extracted classification code of the comparison word match;
counting for the specific tier, a match count of matching classification codes;
determining based on the match count, whether a character string for comparison is to be excluded whose classification code of the comparison word for the specific tier is judged not to match the classification code of the search word for the specific tier;
calculating based on the specified classification codes of the search word and the specified classification codes of the comparison word in a character string that is for comparison and is not to be excluded, a degree of similarity between the search character string and the character string that is for comparison and is not to be excluded; and
outputting a calculation result.

12. A retrieval method executed by a computer, the retrieval method comprising:
setting, as a tier to be used, a designated tier designated from a tier group constituting synonym dictionary data having similar meaning relations among words hierarchically classified and coded therein;
specifying in the synonym dictionary data, specifying for each character string for comparison and specifying in the designated tier to the tier to be used, classification codes of a search word in a search character string and classification codes of a comparison word in character strings that are for comparison and are in a character string group for comparison;
calculating for each character string for comparison and based on the specified classification codes of the search word and the specified classification codes of the comparison words, a degree of similarity between the search character string and the character string for comparison;
counting character strings that are for comparison, are in a character string group that is for comparison and for which the degrees of similarity are calculated, and whose degrees of similarity are equal to or higher than a predetermined degree of similarity;
changing the tier to be used to a tier that is higher than the tier to be used when a result of the counting is less than or equal a predetermined number; and
outputting at least the character strings whose degrees of similarity are each equal to or higher than the predetermined degree of similarity, among a character string group for which the result of the counting is larger than the predetermined number.
